# EUROPEAN PATENT SPECIFICATION

(11) **EP 4 443 289 B1**
(45) Date of publication and mention of the grant of the patent: **04.03.2026**
(21) Application number: 24167434.0
(22) Date of filing: 28.03.2024
(51) Int. Cl.: G06F 8/41

(54) **METHOD, DEVICE AND ELECTRONIC APPARATUS FOR GENERATING INSTRUCTIONS OF ARTIFICIAL INTELLIGENCE ACCELERATOR**
VERFAHREN, VORRICHTUNG UND ELEKTRONISCHE VORRICHTUNG ZUR ERZEUGUNG VON ANWEISUNGEN EINES BESCHLEUNIGERS DER KÜNSTLICHEN INTELLIGENZ
PROCÉDÉ, DISPOSITIF ET APPAREIL ÉLECTRONIQUE POUR GÉNÉRER DES INSTRUCTIONS D'ACCÉLÉRATEUR D'INTELLIGENCE ARTIFICIELLE

(30) Priority: 03.04.2023 CN 202310355429
(43) Date of publication of application: 09.10.2024
(73) Proprietor: Shanghai Horizon Intelligent Automotive Technology Co., Ltd., Shanghai Jiading District 201800 (CN)
(72) Inventor: SHEN, Junzhi, Shanghai, 201800 (CN)
(74) Representative: Kolster Oy Ab

(56) References cited:
- US-A1- 2022 137 941

## Description

### FIELD OF THE INVENTION

This disclosure relates to integrated circuits, and in particular, to a method, device and electronic apparatus for generating instructions of an artificial intelligence accelerator.

### BACKGROUND OF THE INVENTION

In a process of optimizing a compiler of a high-performance artificial intelligence (AI) accelerator (or "AI accelerator" for short) (or a process of processing a source program to generate a machine instruction that can be executed by the AI accelerator), front-end source program parsing, code generation, instruction scheduling, resource allocation, assembling, and other steps are involved. Most of these steps are run and resolved independently, and there is a lack of correlation and collaboration between some of the steps. In this way, a final running result of the compiler cannot meet global optimal requirements, and the compiled machine instruction is not a global optimal solution. As a result, performance of the AI accelerator cannot be fully utilized. US document (US 2022/137941A1) discloses a compilation method suitable for an In-Memory Computing apparatus, comprising: acquiring calculation information of an algorithm to be compiled; converting the algorithm to be compiled into the first intermediate representation according to the calculation information, the first intermediate representation comprises an operator operation executed by the In-Memory Computing apparatus; mapping the first intermediate representation to the second intermediate representation, the second intermediate representation comprises a corresponding relationship between hardware information of the In-Memory Computing apparatus and the operator operation; and compiling the algorithm to be compiled into instruction information recognized by the In-Memory Computing apparatus according to the corresponding relationship, to make the In-Memory Computing apparatus execute the instruction information.

### SUMMARY OF THE INVENTION

In a process of optimizing a compiler of an artificial intelligence accelerator according to related technologies, all key steps are run and resolved separately. In this way, a machine instruction finally compiled by the compiler is not a global optimal solution, and performance of the AI accelerator cannot be utilized.

To resolve the foregoing technical problem, this disclosure is proposed. Embodiments of this disclosure provide a method, device and electronic apparatus for generating instructions of an artificial intelligence accelerator. In an instruction generation scheme of an AI accelerator provided in this disclosure, hardware resources are fully considered during a process of compiling a neural network model. In this case, a finally compiled machine instruction is a global optimal solution, thereby enabling the machine instruction to better utilize performance of the AI accelerator.

According to an aspect of this disclosure, a method for generating instructions of an artificial intelligence accelerator is provided. The method includes: determining a first intermediate representation instruction sequence corresponding to a neural network model that needs to be processed by an artificial intelligence (AI) accelerator, wherein the first intermediate representation instruction sequence is a high-level intermediate representation instruction sequence corresponding to the neural network model; converting, based on a hardware resources of the AI accelerator, the first intermediate representation instruction sequence into one or more second intermediate representation instruction sequences respectively in one or more code generation ways, wherein the one or more second intermediate representation instruction sequences are low-level intermediate representation instruction sequences corresponding to the neural network model; performing scheduling and resource allocation on each instruction in the respective second intermediate representation instruction sequences based on the hardware resources of the AI accelerator, to obtain running results of the respective second intermediate representation instruction sequences; determining a target intermediate representation instruction sequence among one or more second intermediate representation instruction sequences based on the running results of the respective second intermediate representation instruction sequences; and generating the AI accelerator-executable instruction based on the target intermediate representation instruction sequence.

According to a further aspect of this disclosure, a device for generating instructions of an artificial intelligence accelerator is provided, including a determining module, a code generation module, and an instruction generation module. The determining module is configured to determine a first intermediate representation instruction sequence corresponding to a neural network model that needs to be processed by an artificial intelligence (AI) accelerator. The code generation module is configured to convert, based on hardware resources of the AI accelerator, the first intermediate representation instruction sequence determined by the determining module into one or more second intermediate representation instruction sequences respectively in one or more code generation ways. The instruction generation module is configured to perform scheduling and resource allocation on each instruction in the respective second intermediate representation instruction sequences based on the hardware resources of the AI accelerator, to obtain running results of the respective second intermediate representation instruction sequences; determine a target intermediate representation instruction sequence among the one or more second intermediate representation instruction sequences based on the running results of the respective second intermediate representation instruction sequences; and generate the AI accelerator-executable instruction based on the target intermediate representation instruction sequence.

According to a still further aspect of this disclosure, a computer readable storage medium is provided. The storage medium stores a computer program, and the computer program, is used for implementing the method according to any one of the foregoing aspects.

According to another aspect of this disclosure, an electronic apparatus, is provided. The electronic apparatus includes: a processor; and a memory configured to store a processor-executable instruction. The processor is configured to read the executable instruction from the memory, and execute the instruction to implement the method according to any one of the foregoing aspects.

On the basis of the foregoing schemes, when compiling the neural network model that requires the AI accelerator for operations, a plurality of code generation ways may be used to obtain a plurality of low-level intermediate representation instruction sequences (that is, second intermediate representation instruction sequences) to finally generate the AI accelerator-executable instruction while the hardware resources of the AI accelerator are considered as a whole. It may be learned that the hardware resources of the AI accelerator are fully considered during the entire process of compiling the neural network model. Therefore, the finally generated AI accelerator-executable instruction is enabled to better utilize the performance of the AI accelerator while being run on the AI accelerator, thereby improving user experience.

### BRIEF DESCRIPTION OF THE DRAWINGS

FIG. 1 is a schematic diagram of a compilation process according to related technologies;
FIG. 2 is a schematic diagram of a compilation process according to this disclosure;
FIG. 3 is a schematic diagram of a structure of a compilation-side device according to this disclosure;
FIG. 4 is a schematic diagram of a structure of a running-side device according to this disclosure;
FIG. 5 is a first schematic flowchart of a method for generating instructions of an artificial intelligence accelerator according to this disclosure;
FIG. 6 is a schematic diagram of another compilation process according to this disclosure;
FIG. 7 is a second schematic flowchart of a method for generating instructions of an artificial intelligence accelerator according to this disclosure;
FIG. 8 is a diagram of an operational flow of a neural network model according to this disclosure;
FIG. 9 is a third schematic flowchart of a method for generating instructions of an artificial intelligence accelerator according to this disclosure;
FIG. 10 is a fourth schematic flowchart of a method for generating instructions of an artificial intelligence accelerator according to this disclosure;
FIG. 11 is a schematic diagram of a division result of a to-be-processed object according to this disclosure;
FIG. 12 is a fifth schematic flowchart of a method for generating instructions of an artificial intelligence accelerator according to this disclosure;
FIG. 13 is an iterative schematic diagram of an iterative-splitting code generation manner according to this disclosure;
FIG. 14 is a sixth schematic flowchart of a method for generating instructions of an artificial intelligence accelerator according to this disclosure;
FIG. 15 is a schematic diagram of an operation window according to this disclosure;
FIG. 16 is a first schematic diagram of generation of a sub-intermediate representation instruction sequence in a sliding-window code generation manner according to this disclosure;
FIG. 17 is a second schematic diagram of generation of a sub-intermediate representation instruction sequence in a sliding-window code generation manner according to this disclosure;
FIG. 18 is a third schematic diagram of generation of a sub-intermediate representation instruction sequence in a sliding-window code generation manner according to this disclosure;
FIG. 19 is a fourth schematic diagram of generation of a sub-intermediate representation instruction sequence in a sliding-window code generation manner according to this disclosure;
FIG. 20 is a fifth schematic diagram of generation of a sub-intermediate representation instruction sequence in a sliding-window code generation manner according to this disclosure;
FIG. 21 is a sixth schematic diagram of generation of a sub-intermediate representation instruction sequence in a sliding-window code generation manner according to this disclosure;
FIG. 22 is a seventh schematic diagram of generation of a sub-intermediate representation instruction sequence in a sliding-window code generation manner according to this disclosure;
FIG. 23 is an eighth schematic diagram of generation of a sub-intermediate representation instruction sequence in a sliding-window code generation manner according to this disclosure;
FIG. 24 is a ninth schematic diagram of generation of a sub-intermediate representation instruction sequence in a sliding-window code generation manner according to this disclosure;
FIG. 25 is a tenth schematic diagram of generation of a sub-intermediate representation instruction sequence in a sliding-window code generation manner according to this disclosure;
FIG. 26 is a seventh schematic flowchart of a method for generating instructions of an artificial intelligence accelerator according to this disclosure;
FIG. 27 is an eighth schematic flowchart of a method for generating instructions of an artificial intelligence accelerator according to this disclosure;
FIG. 28 is a ninth schematic flowchart of a method for generating instructions of an artificial intelligence accelerator according to this disclosure;
FIG. 29 is a tenth schematic flowchart of a method for generating instructions of an artificial intelligence accelerator according to this disclosure;
FIG. 30 is a schematic diagram of an instruction running result generated in a sliding-window code generation manner according to this disclosure; and
FIG. 31 is a schematic diagram of a structure of a device for generating instructions of an artificial intelligence accelerator according to this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

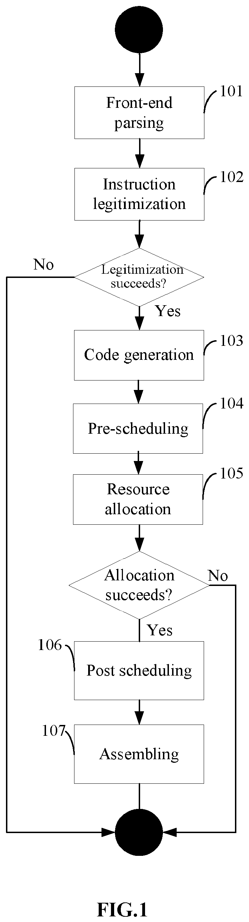

In related technologies, a process of compiling a neural network model by a compiler is shown in FIG. 1. The entire process may sequentially include the following steps: front-end parsing 101, instruction legitimization 102, code generation 103, pre-scheduling 104, resource allocation 105 (such as SRAM allocation), post scheduling 106, and assembling 107.

Specifically, the front-end parsing 101 is mainly used to parse the neural network model input by a user to the compiler, and to obtain a high-level intermediate representation instruction sequence. The instruction legitimization102 is mainly used to convert, by using a specific legitimization manner, the high-level intermediate representation instruction sequence into a high-level intermediate representation instruction sequence that may be legitimated by an artificial intelligence (AI) accelerator. The code generation 103 is mainly used to degrade the legitimized high-level intermediate representation instruction sequence to a low-level intermediate representation instruction sequence that may be executed (which may be run virtually with resources allocatable) on the AI accelerator. The pre-scheduling 104 is mainly used to determine, based on dependency relationships of all low-level intermediate representation instructions in the low-level intermediate representation instruction sequence, scheduling results of all the low-level intermediate representation instructions, that is, an execution order of all the low-level intermediate representation instructions. The resource allocation 105 is mainly used to allocate corresponding resources (such as SRAM resources, including an SRAM address and an SRAM space) in the AI accelerator based on a tensor to be processed and calculated by each low-level intermediate representation instruction. The post scheduling 106 is mainly used to virtually run, in combination with the scheduling results in the pre-scheduling, an allocation result of the resource allocation, and AI accelerator modules corresponding to the respective low-level intermediate representation instructions (that is, modules that may perform specific operations, such as a convolution module and a pooling module), the low-level intermediate representation instruction sequence and adjust the execution order of all the low-level intermediate representation instructions in the low-level intermediate representation instruction sequence based on a running result, to obtain a final scheduling result. The assembling 107 is mainly used to convert, based on the final scheduling result obtained from the post scheduling, each low-level intermediate representation instruction in each low-level intermediate representation instruction sequence into a machine instruction that may be directly executed in the AI accelerator.

It may be learned that in the compilation process of the existing compiler, most of the steps are performed and resolved independently, and there is a lack of correlation and collaboration between the steps. Moreover, impact of a hardware resources of the AI accelerator on instruction generation is not comprehensively considered. As a result, performance of the AI accelerator cannot be fully utilized according to a compilation scheme of the existing compiler.

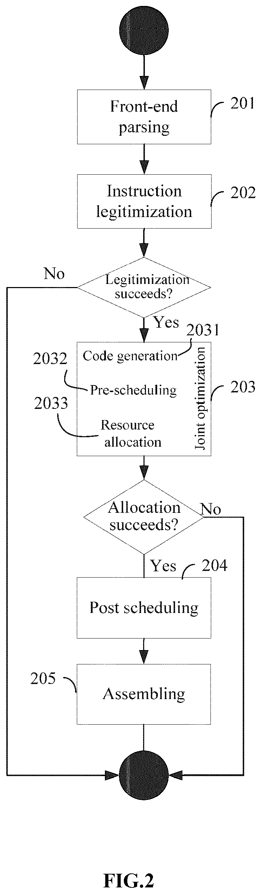

To this end, referring to FIG. 2, an instruction generation scheme for an artificial intelligence accelerator is provided according to an embodiment of this disclosure. In this scheme, a plurality of code generation ways are used to obtain a plurality of low-level intermediate representation instruction sequences (that is, second intermediate representation instruction sequences) to finally generate AI accelerator-executable instructions while the hardware resources of the AI accelerator are considered as a whole.

In this way, during the entire process of compiling the neural network model to generate the AI accelerator-executable instructions, the hardware resources of the AI accelerator are fully considered. Therefore, the finally generated AI accelerator-executable instructions are enabled to better utilize the hardware resources of the AI accelerator, thereby utilizing the performance of the AI accelerator and improving user experience.

### Exemplary system

Embodiments of this disclosure relate to a compilation-side device (that is, a compiler in this disclosure) and a running-side device. The compilation-side device is configured to generate executable instructions for the running-side device. The running-side device is configured to perform operations on a neural network by running the instructions provided by the compilation-side device. These operations include, but are not limited to: a convolution operation, a pooling operation, and an activation function operation.

In some embodiments, the compilation-side device may include, but is not limited to, a personal computer, a server computer, a multi-processor system, and a microprocessor-based system.

In some embodiments, the running-side device may include, but is not limited to, an AI accelerator or a neural network chip.

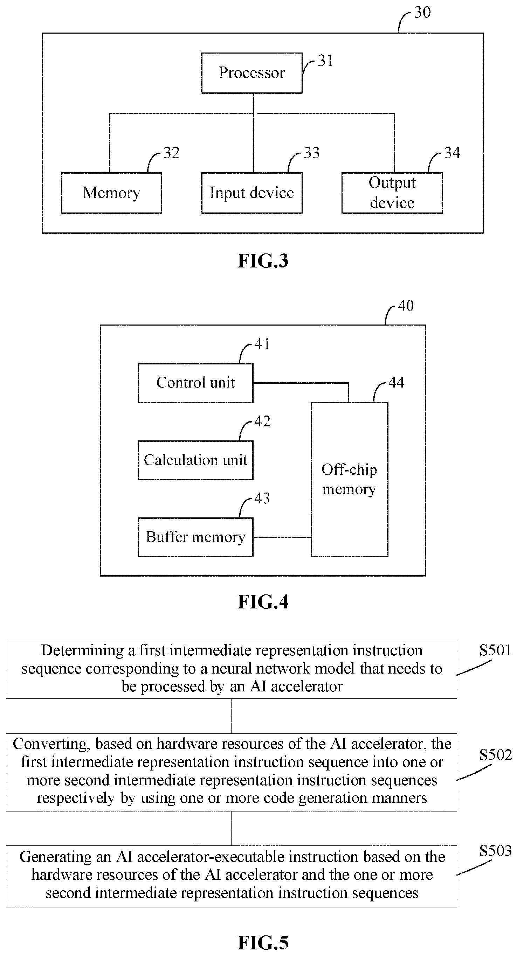

FIG. 3 is a schematic diagram of a structure of an electronic apparatus 30 according to an embodiment of this disclosure. The electronic apparatus 30 may be configured to implement functions of the compilation-side device. As shown in FIG. 3, the electronic apparatus 30 includes at least one processor 31 and a memory 32. In some embodiments, as shown in FIG. 3, the electronic apparatus 30 may further include an input device 33 and an output device 34.

FIG. 4 is a schematic diagram of a structure of an electronic apparatus 40 according to an embodiment of this disclosure. The electronic apparatus 40 may be configured to implement functions of the running-side device. As shown in FIG. 4, the electronic apparatus 40 may include a control unit 41 and a calculation unit 42. The control unit 41 is configured to run instructions provided by the compilation-side device to control the calculation unit 42 to implement operations of a neural network model. In some embodiments, the electronic apparatus 40 may further include a buffer memory 43 and an off-chip memory 44.

### Exemplary method

A method in the following embodiments of this disclosure may be applied to a lot of fields that require calculations for a neural network model, such as image processing, intelligent driving, speech recognition, text conversion, or multi-modal processing. For example, by implementing the method provided in the embodiments of this disclosure, image data may be processed in the field of image processing.

FIG. 5 illustrates a method for generating instructions of an artificial intelligence accelerator according to an embodiment of this disclosure. The method may be applied to a compilation-side device disclosed in the foregoing embodiments. As shown in FIG. 5, the method includes S501-S503.

Step S501. Determining a first intermediate representation instruction sequence corresponding to a neural network model that needs to be processed by an AI accelerator.

An existing processor (such as a central processing unit (CPU)) has a certain data processing capability. However, for specific processing tasks, such as image processing and speech processing, the CPU has low execution efficiency and poor execution effects. Therefore, an artificial intelligence accelerator is required to perform data operations corresponding to the foregoing specific processing tasks. For example, the AI accelerator may be any accelerator capable of implementing the neural network model, such as a brain processing unit (BPU) or a neural network processing unit (NPU). A type and a structure of the AI accelerator are not specifically limited in this embodiment of this disclosure.

In some embodiments, the neural network model may be a model applied in a plurality of different fields, such as natural language processing, computer vision, speech recognition, and image processing. In a plurality of fields, different neural network models may be designed based on application scenarios and application requirements. The application scenarios and model structures of the neural network models are not limited in this disclosure.

In the technical field of artificial intelligence, because a source language corresponding to the neural network model is a highly abstract language compared to an AI accelerator-executable instruction, it is needed to gradually reduce a level of abstraction of the source language through intermediate representation (IR). For example, the intermediate representation includes the first intermediate representation instruction sequence and the second intermediate representation instruction sequence that are described in this application. A level of abstraction of the first intermediate representation instruction sequence (that is, a high-level intermediate representation instruction sequence in this application) is greater than that of the second intermediate representation instruction sequence (that is, a low-level intermediate representation instruction sequence in this application).

Referring to FIG. 2, steps performed in S501 are front-end parsing 201 and instruction legitimization 202.

In the process of the front-end parsing 201, the compilation-side device may analyze text and syntax of the neural network model according to a specific parsing manner or derivation rule, so as to obtain high-level intermediate representation instruction sequences in a unified format. In the embodiments of this disclosure, a specific expression form of the high-level intermediate representation instruction sequence may be any one of the following: image IR, linear IR, and mixed IR. The image IR is mainly to store information obtained by parsing the neural network model into an image. Each instruction corresponding to the neural network model is represented by using nodes, edges, lists, trees, and the like in the image. The linear IR is assembly code similar to an abstract machine, which is specifically to convert the information obtained by parsing the neural network model into an ordered sequence of operations (that is, operation instructions), and meanwhile specify a clear order for the operation instructions in this sequence. The mixed IR is a combination of the linear IR and the image IR.

The high-level intermediate representation instruction sequence obtained from the front-end parsing is directly parsed based on the syntax and the text of the neural network model, and some instructions or data types indicated by the high-level intermediate representation instruction sequence may not be directly supported by the AI accelerator. On this basis, before further compiling and processing the high-level intermediate representation instruction sequence, it is needed to use a specific legitimization manner in the process of the instruction legitimization 202 to convert the high-level intermediate representation instruction sequence into the legal first intermediate representation instruction sequence.

In some possible scenarios, the high-level intermediate representation instruction sequence obtained from the front-end parsing may have some instructions that cannot be legitimized. Therefore, after the instruction legitimization 202, it is needed to determine whether the instruction is successfully legitimized. If it is determined that some instructions cannot be legitimized (that is, the legitimization fails), it is highly likely indicated that the AI accelerator cannot support execution of these instructions. Therefore, in this case, error information may be directly provided to a user to inform the user which instructions cannot be legitimized. Subsequently, the user may modify the neural network model based on the error information, so as to avoid occurrence of an illegal high-level intermediate representation instruction. After modifying the neural network model, the user may use the compilation-side device again to compile the neural network model. Subsequent compilation steps are performed after all high-level intermediate representation instructions are legal.

The subsequent compilation steps are performed if it is determined that all instructions may be legitimized.

The neural network model is composed of a plurality of neural network layers. One or more high-level intermediate representation instructions may be obtained after an operation corresponding to one neural network layer is performed with the front-end parsing and the legitimization of the compilation-side device. All high-level intermediate representation instructions are obtained by converting operations corresponding to a plurality of neural network layers in the neural network model, and then a high-level intermediate representation instruction sequence, that is, the first intermediate representation instruction sequence, may be formed.

In the embodiments of this disclosure, an expression form of the first intermediate representation instruction sequence may be in any feasible form. For details, reference may be made to relevant descriptions about the high-level intermediate representation instruction sequence in the foregoing embodiment, and details are not described herein again.

S502. Converting, based on hardware resources of the AI accelerator, the first intermediate representation instruction sequence into one or more second intermediate representation instruction sequence respectively by using one or more code generation manner.

In the embodiments of this disclosure, the second intermediate representation instruction sequence is a low-level intermediate representation instruction sequence. For example, as shown in FIG. 2, steps performed in step S502 may specifically be code generation 2031 of the compilation-side device during the compilation process.

An objective of the code generation 2031 is to degrade the high-level intermediate representation instruction sequence that is obtained after the compilation-side device performs the front-end parsing and the instruction legitimization on the neural network model to a low-level intermediate representation instruction sequence (that is, the second intermediate representation instruction sequence) that may be executed/ executable on the AI accelerator. It should be noted that the terms "executed" or "executable" mentioned herein refers to that corresponding resources (including computing resources and storage resources) may be allocated based on content of low-level intermediate representation instructions in the low-level intermediate representation instruction sequence, and virtual running is performed after scheduling. The instructions in the low-level intermediate representation instruction sequence may correspond to operators supported by the AI accelerator. Therefore, it is considered that the instructions in the low-level intermediate representation instruction sequence may be executed on the AI accelerator.

Specifically, converting the legitimized high-level first intermediate representation instruction sequence into the low-level second intermediate representation instruction sequence may include instruction selection and instruction generation. The instruction selection is specifically to match one or more low-level intermediate representation instructions for each first intermediate representation instruction in the first intermediate representation instruction sequence by using a pre-set selection strategy (or an operator selection algorithm). The instruction generation is specifically to convert all first intermediate representation instructions into matched low-level intermediate representation instructions based on matching results obtained from the instruction selection, so as to obtain the low-level second intermediate representation instruction sequence.

Different from the related technologies, in the embodiments of this disclosure, to enable the executable instruction compiled and generated by the compilation-side device to better utilize performance of the AI accelerator, the hardware resources of the AI accelerator are considered when the code generation step is performed. In the embodiments of this disclosure, the hardware resources of the AI accelerator may include computing resources and storage resources.

For example, the computing resources may include: a quantity of conv modules that can perform convolution (conv) operations, a quantity of pool modules that can perform pooling (pool) operations, a quantity of load modules that can perform data loading (load), and a quantity of store modules that can perform storage (store) operations, and the like.

For example, the storage resources may include: a quantity of registers, a quantity of static random access memories (SRAM), sizes of the SRAMs, and the like. The SRAMs may include an L1 SRAM and an L2 SRAM.

The hardware resources of the AI accelerator may be pre-obtained by the compilation-side device before implementing the method for generating instructions of the AI accelerator provided in the embodiments of this disclosure.

Further, to exhaust all compilation possibilities of the neural network model and achieve better compilation effects, in the embodiments of this disclosure, on the basis of the hardware resources of the AI accelerator, the first intermediate representation instruction sequence is converted into one or more second intermediate representation instruction sequences respectively by using one or more code generation manner. Each code generation manner corresponds to one or more second intermediate representation instruction sequence that is converted from the first intermediate representation instruction sequence.

For example, the one or more code generation manner may include: a simple code generation manner, an iterative-splitting code generation manner, and a sliding-window code generation manner.

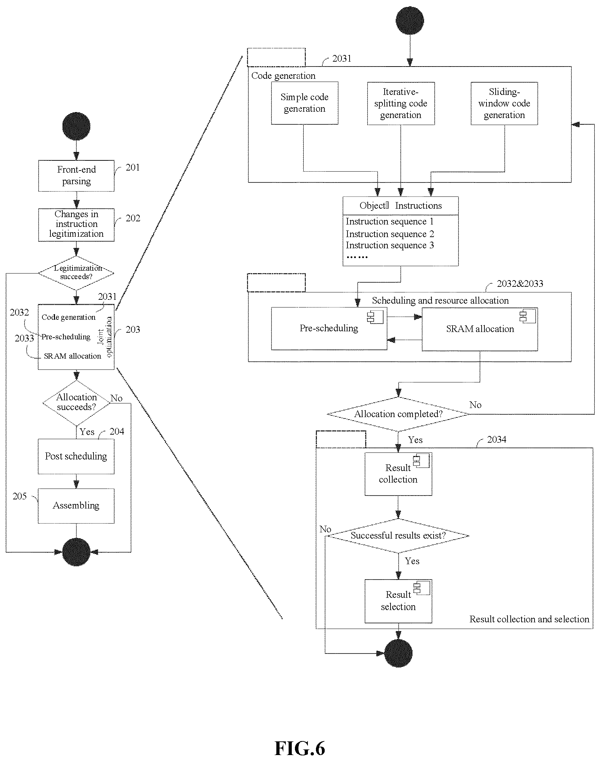

In this case, referring to FIG. 6 in combination with FIG. 2, the code generation in joint optimization 203 of the compilation-side device may specifically include: generating an instruction sequence 1 in the one or more second intermediate representation instruction sequence by using the simple code generation manner, generating an instruction sequence 2 in the one or more second intermediate representation instruction sequence by using the iterative-splitting code generation manner, and generating an instruction sequence 3 in the one or more second intermediate representation instruction sequence by using the sliding-window code generation manner. Specific implementation of several code generation ways mentioned herein may be specifically described in subsequent embodiments, and details are not described herein.

S503. Generating an AI accelerator-executable instruction based on the hardware resources of the AI accelerator and the one or more second intermediate representation instruction sequences.

After one or more low-level second intermediate representation instruction sequence is obtained, to clarify an execution order of respective second intermediate representation instructions in the second intermediate representation instruction sequence, the compilation-side device is required to determine the execution order of the respective second intermediate representation instructions based on the dependency relationships of the low-level intermediate representation instructions. This process may be referred to as pre-scheduling.

Meanwhile, to enable each second intermediate representation instruction to be run successfully on the AI accelerator, it is needed to allocate resources (such as SRAM resources, including an SRAM address and an SRAM space) for each second intermediate representation instruction based on resource requirements of each second intermediate representation instruction. This process may be referred to as resource allocation.

After the pre-scheduling is completed and the resources are successfully allocated, it is needed to combine the scheduling results in the pre-scheduling, a resource allocation result of the resource allocation, and AI accelerator modules corresponding to the respective second intermediate representation instructions (that is, modules that may perform specific operations, such as a convolution module and a pooling module) to virtually run the second intermediate representation instruction sequence and adjust an execution order of respective low-level intermediate representation instructions in the low-level intermediate representation instruction sequence (that is, rescheduling the respective low-level intermediate representation instructions in the low-level intermediate representation instruction sequence) based on a running result, so as to obtain a scheduling result that can utilize the performance of the AI accelerator most efficiently. This process may be referred to as post scheduling.

After the post scheduling is completed, each low-level intermediate representation instruction may be converted, based on the scheduling result obtained from the post scheduling, into an instruction that may be directly executed by the AI accelerator, that is, an instruction built by using a machine language.

On this basis, for example, referring to FIG. 2, steps performed in S502 may specifically be pre-scheduling 2032, resource allocation 2033, post scheduling 204, and assembling 205 of the compilation-side device during the compilation process.

In a process of performing S502, to enable the finally obtained AI accelerator-executable instruction to fully utilize the performance of the AI accelerator, the hardware resources of the AI accelerator need to be considered, so that the finally generated AI accelerator-executable instruction can fully utilize the performance of the AI accelerator, thereby improving user experience.

On the basis of the technical solutions provided in the embodiments of this disclosure, when compiling the neural network model that requires the AI accelerator for operations, a plurality of code generation ways are used to obtain a plurality of low-level intermediate representation instruction sequences (that is, second intermediate representation instruction sequences) so as to finally generate the AI accelerator-executable instructions while the hardware resources of the AI accelerator are considered as a whole. It may be learned that, the hardware resourced of the AI accelerator are combined during the entire process of compiling the neural network model. Therefore, the finally generated AI accelerator-executable instruction is enabled to better utilize the performance of the AI accelerator, thereby improving the user experience.

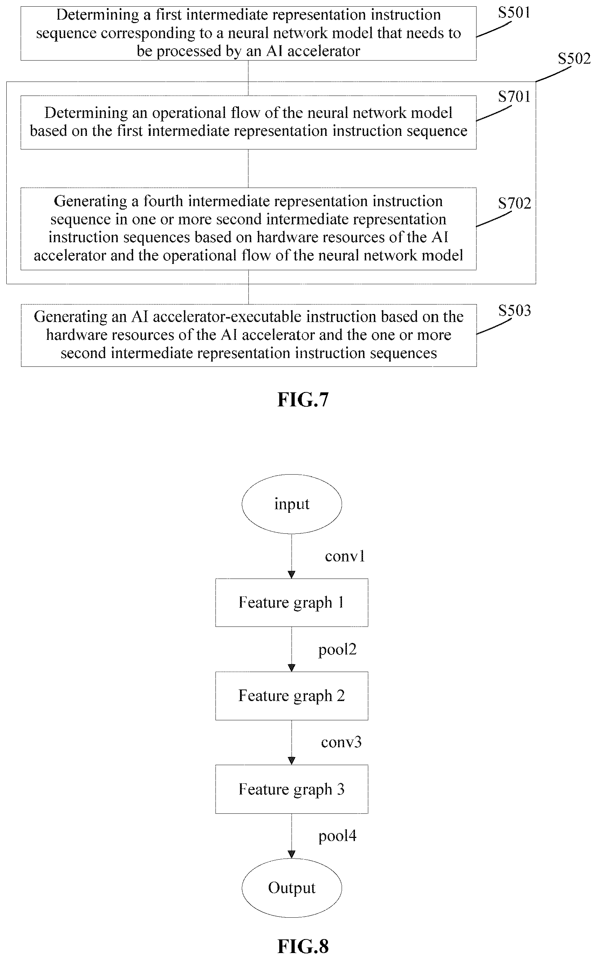

In some embodiments, referring to FIG. 7 in combination with FIG. 5, S502 may specifically include S701 and S702.

S701. Determining an operational flow of the neural network model based on the first intermediate representation instruction sequence.

The first intermediate representation instruction sequence is a highly abstract representation of the neural network model. Therefore, a diagram of the operational flow of the neural network model may be obtained based on the first intermediate representation instruction sequence.

For example, FIG. 8 illustrates the diagram of the operational flow of the neural network model that is indicated by the first intermediate representation instruction sequence. On the basis of FIG. 8, it may be learned that the neural network model includes four layers, sequentially including, from input to input, a first convolution layer conv 1, a first pooling layer pool 2, a second convolution layer conv 3, and a second pooling layer pool 4. During a process of converting input of the neural network model into output, a feature graph 1, a feature graph 2, and a feature graph 3 may appear sequentially. The input, the output, the feature graph 1, the feature graph 2, and the feature graph 3 may be tensors.

The tensors may be multidimensional arrays. For example, in this disclosure, the tensor has three dimensions: H, W, and C. H represents a height of a feature graph, W represents a width of the feature graph, and C represents a number of channels of the feature graph (for example, C of an RGB image is 3).

In this disclosure, to enable the AI accelerator to successfully complete the operation of the neural network model, the input of the neural network model may be pre-stored in a specific memory of the AI accelerator. For example, the specific memory may be a double data rate (DDR) synchronous dynamic random access memory or any other feasible-off chip memory. An example in which the specific memory is DDR is used in all subsequent embodiments, and details are not described herein.

S702. Generating a fourth intermediate representation instruction sequence in the one or more second intermediate representation instruction sequences based on the hardware resources of the AI accelerator and the operational flow of the neural network model.

A simplest code generation strategy is to directly generate an instruction sequence conforming to the operational flow based on the operational flow. This idea is the code generation strategy in the simple code generation manner described in the foregoing embodiments.

In this disclosure, considering high computational complexity of the neural network model, to improve computational efficiency of the AI accelerator, tensors required for each calculation may be stored in the SRAM of the AI accelerator when the AI accelerator processes and calculates the neural network model. Certainly, in practice, the tensors may also be stored in another cache resource similar to the SRAM in the AI accelerator. This is not specifically limited in this disclosure. An example in which the tensors are stored in the SRAM for the operation of the AI accelerator is used in all subsequent embodiments, and details are not described herein.

On this basis, the following example is used: the operational flow of the neural network model is an operational flow shown in FIG. 8; the computing resources in the hardware resources of the AI accelerator include the conv module, the pool module, the load module, and the store module; the storage resources in the hardware resources of the AI accelerator include the SRAM; the low-level intermediate representation instructions supported by the AI accelerator include: a load instruction supporting the load module to load the tensor from the DDR of the AI accelerator to the SRAM of the AI accelerator, a store instruction supporting the store module to store the tensor in the SRAM of the AI accelerator to the DDR of the AI accelerator, a conv instruction supporting the conv module to complete the convolution operation, and a pool instruction supporting the pool module to complete the pooling operation; and data volumes of the input, a feature graph 1-F1, a feature graph 2-F2, a feature graph 3-F3, and the output need to occupy 8 SRAMs. In this case, the fourth intermediate representation instruction sequence generated by using the simplest code generation strategy may specifically include the following six intermediate representation instructions:
1. load input. This instruction specifically instructs the AI accelerator to load the input from the DDR to the SRAM.
2. conv F1, input. This instruction specifically instructs the AI accelerator to use the conv module to perform a convolution operation on the input, to obtain the feature graph 1-F1.
3. pool F2, F1. This instruction specifically instructs the AI accelerator to use the pool module to perform a pooling operation on F1, to obtain a feature graph 2-F2.
4. conv F3, F2. This instruction specifically instructs the AI accelerator to use the conv module to perform a convolution operation on F2, to obtain the feature graph 3-F3.
5. pool output, F3. This instruction specifically instructs the AI accelerator to use the pool module to perform a pooling operation on F3, to obtain the output.
6. store output. This instruction specifically instructs the AI accelerator to store the output in the SRAM into the DDR.

The foregoing 6 instructions have a certain sequential execution relationship, and an execution order is from 1 to 6. It may be learned that quantities of SRAMs required for the input, F1-F3, and the output are 8, 8, 8, 8, and 4, respectively. During the process of obtaining the output by using the foregoing instructions, an input tensor and an output tensor of at least one instruction are retained in the SRAM. Therefore, in this implementation, while the fourth intermediate representation instruction sequence may be quickly generated and relatively few computing resources of the AI accelerators may be occupied, demand for the SRAM resources of the AI accelerator needs to be determined in combination with a specific structure of the neural network model. For example, if a maximum amount of data corresponding to input and output of a second layer in all layers of the neural network model is M units of data, demand of the fourth intermediate representation instruction sequence for the SRAM resources of the AI accelerator is at least M units of data.

According to the technical solutions corresponding to S701 and S702, the fourth intermediate representation instruction sequence may be generated directly based on the operational flow of the neural network model and the hardware resources of the AI accelerator. Because in this generation scheme, an execution order of respective instructions in the fourth intermediate representation instruction sequence is consistent with the operational flow of the neural network model, there is no need to consider whether the instructions are parallel and whether a quantity of the instructions is small in the following. Therefore, instruction scheduling in the subsequent compilation process may be completed quickly, so that an AI accelerator-executable instruction corresponding to the fourth intermediate representation instruction sequence may be generated more quickly, thereby improving a compilation speed of the compilation-side device.

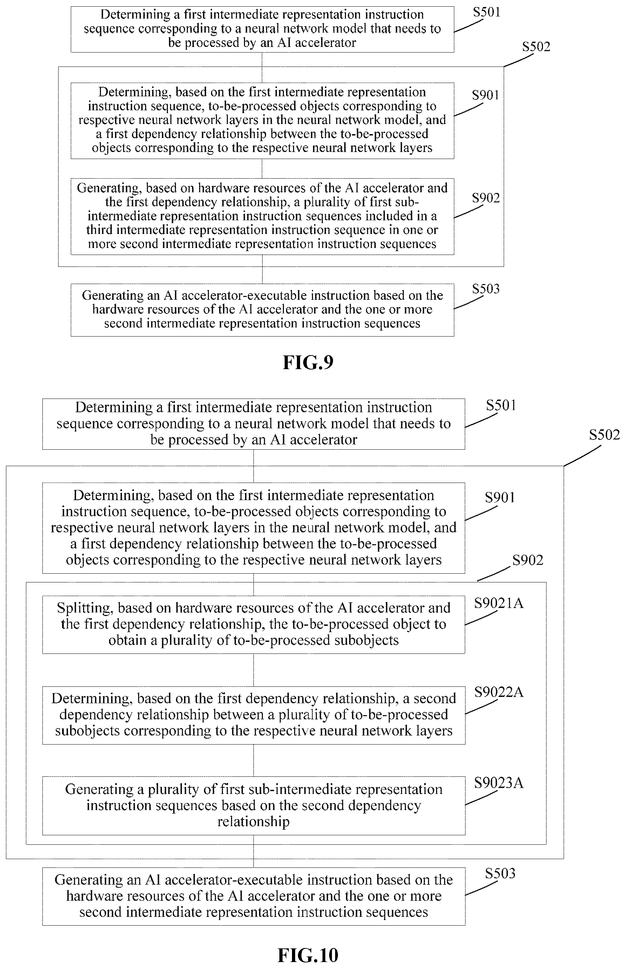

In some embodiments, referring to FIG. 9 in combination with FIG. 5, S502 may specifically include S901 and S902.

S901. Determining, based on the first intermediate representation instruction sequence, to-be-processed objects corresponding to respective neural network layers in the neural network model, and a first dependency relationship between the to-be-processed objects corresponding to the respective neural network layers.

In the embodiments of this disclosure, an input object and an output object of the neural network layer may be referred to as the to-be-processed objects.

For example, FIG. 8 illustrates the diagram of the operational flow of the neural network model that is indicated by the first intermediate representation instruction sequence. As shown in FIG. 8, an input object of the conv 1 is input of the entire neural network model, and an output object of the conv 1 is the feature graph 1. An input object of the pool 2 is the output object of the conv 1-the feature graph 1, and an output object of the pool 2 is the feature graph 2. An input object of the conv 3 is the output object of the pool 2-the feature graph 2, and an output object of the conv 3 is the feature graph 3. An input object of the pool 4 is the output object of the conv 3-the feature graph 3, and an output object of the pool 4 is output of the entire neural network model.

Further, it may be learned that the first dependency relationship between the respective to-be-processed objects is as follows: The feature graph 1 depends on the input, the feature graph 2 depends on the feature graph 1, the feature graph 3 depends on the feature graph 2, and the output depends on the feature graph 3. In addition, the first dependency relationship should also include operation contents between the input, the feature graph 1, the feature graph 2, the feature graph 3, and the output. For example, the feature graph 1 is obtained by performing a convolution operation on the input, and a size of the convolution kernel is 2×2. The first dependency relationship mentioned in the following embodiments is similar, which is not specifically described.

S902. Generating, based on the hardware resources of the AI accelerator and the first dependency relationship, a plurality of first sub-intermediate representation instruction sequences included in a third intermediate representation instruction sequence in the one or more second intermediate representation instruction sequences.

To obtain more parallel opportunities and a greater scheduling optimization space for the compiler to perform pre-scheduling in the following, after determining the hardware resources of the AI accelerator and the first dependency relationship, the compiler may split the to-be-processed object in the neural network layer by using an appropriate strategy, so as to obtain a plurality sets of sub-operational flows, thus generating a plurality sets of sub-intermediate representation instruction sequences. Each set of sub-intermediate representation instruction sequences may include a plurality of intermediate representation instructions, and in different sets of intermediate representation instructions, there are a lot of instructions that do not have necessary dependency relationships. In this case, the compiler may find more parallel opportunities during the pre-scheduling.

The generation idea for the third intermediate representation instruction sequence in S901 and S902 is a code generation principle for the iterative-splitting code generation manner and the sliding-window code generation manner in the foregoing embodiments. Specific details are explained in subsequent embodiments.

According to technical solutions corresponding to S901 and S902, the first dependency relationship may be obtained through the first intermediate representation instruction sequence. Based on the first dependency relationship and the hardware resource, it may be learned that a plurality of first sub-intermediate representation instruction sequences in the third intermediate representation instruction sequence in the one or more second intermediate representation instruction sequences may be formed. In this way, because there are a plurality sets of first sub-intermediate representation instruction sequences that do not have necessary dependency relationships, more parallel opportunities may be provided for subsequent instruction scheduling, so that the finally generated AI accelerator-executable instruction can better utilize the performance of the AI accelerator.

In some embodiments, using the iterative-splitting code generation manner as an example, referring to FIG. 10 in combination with FIG. 9, S902 may specifically include S9021A-S9023A.

S9021A. Splitting, based on the hardware resources of the AI accelerator and the first dependency relationship, the to-be-processed object to obtain a plurality of to-be-processed subobjects.

An objective of splitting the to-be-processed object is to obtain a plurality of sub-operational flows of the neural network model, and each sub-operational flow needs to conform to an original operational flow of the neural network model. Therefore, the first dependency relationship needs to be considered for splitting the to-be-processed object. In addition, whether the plurality of sub-operational flows obtained through splitting may run successfully depends on whether the hardware resources of the AI accelerator support requirements of all sub-operational flows.

For example, S9021A is specifically described below by using the following conditions as examples: The first dependency relationship is a dependency relationship indicated in the diagram of the operational flow of the neural network model shown in FIG. 8. In FIG. 8, four to-be-processed objects except the output object output have a same data size, that is, 8 units of data, with an H-dimensional size of 8. A data size of the output object output may be 4 units of data, and a H-dimensional size is 4. The computing resources in the hardware resources of the AI accelerator include the conv module, the pool module, the load module, and the store module. The storage resources in the hardware resources of the AI accelerators include 16 SRAMs (which may also be referred to as SRAM units, similar to those in the subsequent embodiments) that can store one unit of data. The low-level intermediate representation instructions supported by the AI accelerator include the load instruction, the store instruction, the conv instruction, the pool l instruction, and a pool 2 instruction.

It should be noted that an objective of the operation of the neural network model is to obtain a final output object. Therefore, respective to-be-processed objects that may be obtained before the output object need to be segmented based on the output object.

Based on the foregoing conditions, first, it may be attempted to divide the output object output into two equal output subobjects, that is, output 0 and output 1, with Each part outputting 2 units of data. Based on a size and a step size of a kernel (a convolution kernel or a pooling kernel) corresponding to each instruction in the low-level intermediate representation instruction, it may be learned that the output 0 requires 4 units of data in the feature graph 3, the 4 units of data in the feature graph 3 require 5 units of data in the feature graph 2, the 5 units of data in the feature graph 2 require 6 units of data in the feature graph 1, and the 6 units of data in the feature graph 1 require 7 units of input data. In this case, each of the input, the feature graph 1, the feature graph 2, and the feature graph 3 needs to be divided into four equal parts. In this way, it may be clearly learned that if the output 0 needs to be calculated, the AI accelerator needs to have at least 24 SRAMs (i.e., 2+4+5+6+7=24). Obviously, based on the foregoing conditions, the AI accelerator cannot meet this requirement, so that such division strategy cannot be implemented.

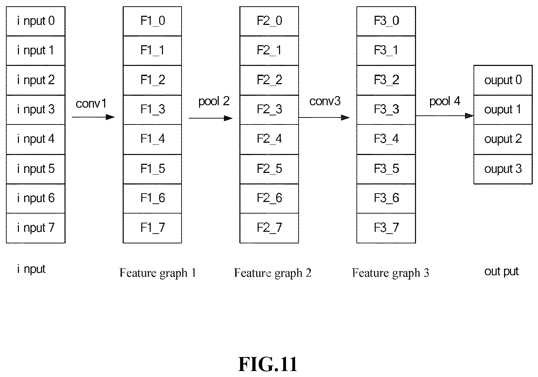

Subsequently, it is deduced by using same logic that, when the output object output is divided into four identical output subobjects (output 0-output 3), each output subobject is 1 unit of data. For only a first output subobject, that is, output 1, all other intermediate data except input needs to be calculated during calculation. Therefore, most SRAMs are required for calculating the output 0, which specifically are 1+2+3+4+5=15 SRAMs. In this case, this division manner may meet requirements for the hardware resources of the AI accelerator, and is feasible. In this case, as shown in FIG. 11, each of the input, the feature graph 1, the feature graph 2, and the feature graph 3 is divided into eight equal parts. Specifically, to-be-processed subobjects obtained by dividing the input include input 0, input 1, input 2, input 3, input 4, input 5, input 6, and input 7; to-be-processed subobjects obtained by dividing the feature graph 1 include F1_0, F1_1, F1_2, F1_3, F1_4, F1_5, F1_6, and F1_7; to-be-processed subobjects obtained by dividing the feature graph 2 include F2_0, F2_1, F2_2, F2_3, F2_4, F2_5, F2_6, and F2_7; and to-be-processed subobjects obtained by dividing the feature graph 3 include F3_0, F3_1, F3_2, F3_3, F3_4, F3_5, F3_6, and F3_7.

Certainly, when the output object is divided into four or more equal parts, the requirements for the hardware resources of the AI accelerator may also be met.

It should be noted that the foregoing examples illustrate the division manner of determining the to-be-processed subobjects based on the storage resources in the hardware resources of the AI accelerator. In practice, it is also needed to consider the division manner of the to-be-processed subobjects in combination with the computing resources in the hardware resources of the AI accelerators. For example, if there are only two conv modules in the computing resources of the AI accelerator, to better utilize the performance of the AI accelerator, it is needed to enable a quantity of parallelizable convolution operations in parallelizable operations corresponding to a plurality sets of to-be-processed subobjects after division to be less than 2 as possible.

S9022A. Determining, based on the first dependency relationship, a second dependency relationship between a plurality of to-be-processed subobjects corresponding to the respective neural network layers.

The embodiments are intended to divide the to-be-processed objects to obtain a plurality sets of to-be-processed subobjects based on a division result, and then obtain a plurality of first sub-intermediate representation instruction sequences. There should be a dependency relationship between the to-be-processed subobjects in each group of to-be-processed subobjects, and this dependency relationship is necessarily obtained based on the first dependency relationship between the to-be-processed objects.

For example, if the first dependency relationship is the dependency relationship indicated in the diagram of the operational flow of the neural network model shown in FIG. 8, and the division result of the to-be-processed subobjects is shown in FIG. 11, the second dependency relationship may include the following.

The output 0 is obtained based on pooling operations of the F3_0 and the F3_1 (relevant parameters are same as those corresponding to the pool 2 instruction), the F3_0 and the F3_1 are obtained based on convolution operations of the F2_0-the F2_2 (that is, the F2_0, the F2_1, and the F2_2) (relevant parameters are same as those corresponding to the conv instruction), the F2_0-the F2_2 are obtained based on pooling operations of the F1_0-the F1_3 (that is, the F1_0, the F1_1, the F1_2, and the F1_3) (relevant parameters are same as those corresponding to the pool instruction), and the F1_0-the F1_3 are obtained based on convolution operations of the input 0-the input 4 (that is, the input 0, the input 1, the input 2, the input 3, and the input 4) (relevant parameters are same as those corresponding to the conv instruction).

The output 1 is obtained based on pooling operations of the F3_2 and the F3_3 (relevant parameters are same as those corresponding to the pool 2 instruction), the F3_2 and the F3_3 are obtained based on convolution operations of the F2_2-the F2_4 (that is, the F2_2, the F2_3, and the F2_4) (relevant parameters are same as those corresponding to the conv instruction), the F2_2-the F2_4 are obtained based on pooling operations of the F1_2-the F1_5 (that is, the F1_2, the F1_3, the F1_4, and the F1_5) (relevant parameters are same as those corresponding to the pool instruction), and the F1_2-the F1_5 are obtained based on convolution operations of the input 2-the input 6 (that is, the input 2, the input 3, the input 4, the input 5, and the input 6) (relevant parameters are same as those corresponding to the conv instruction).

The output 2 is obtained based on pooling operations of the F3_4 and the F3_5 (relevant parameters are same as those corresponding to the pool 2 instruction), the F3_4 and the F3_5 are obtained based on convolution operations of the F2_4-the F2_6 (that is, the F2_4, the F2_5, and the F2_6) (relevant parameters are same as those corresponding to the conv instruction), the F2_4-the F2_6 are obtained based on pooling operations of the F1_4-the F1_7 (that is, the F1_4, the F1_5, the F1_6, and the F1_7) (relevant parameters are same as those corresponding to the pool instruction), and the F1_4-the F1_7 are obtained based on convolution operations of the input 4-the input 7 (that is, the input 4, the input 5, the input 6, and the input 7) (relevant parameters are same as those corresponding to the conv instruction).

The output 3 is obtained based on pooling operations of the F3_6 and the F3_7 (relevant parameters are same as those corresponding to the pool 2 instruction), the F3_6 and the F3_7 are obtained based on convolution operations of the F2_6 and the F2_7 (relevant parameters are same as those corresponding to the conv instruction), the F2_6 and the F2_7 are obtained based on pooling operations of the F1_6 and the F1_7 (relevant parameters are same as those corresponding to the pool instruction), and the F1_6 and the F1_7 are obtained based on convolution operations of the input 6 and the input 7 (relevant parameters are same as those corresponding to the conv instruction).

S9023A. Generating the plurality of first sub-intermediate representation instruction sequences based on the second dependency relationship.

After the second dependency relationship is determined, a plurality sets of to-be-processed subobjects that depend on each other may obtained based on the second dependency relationship. A plurality of first sub-intermediate representation instruction sequences may be generated based on dependency relationships between respective to-be-processed subobjects in each set of to-be-processed subobjects.

According to the technical solutions corresponding to S9021A-S9023A, a strategy for splitting the to-be-processed object and the second dependency relationship of different to-be-processed subobjects after the splitting may be determined based on the hardware resources and the first dependency relationship. Subsequently, as the second dependency relationship may represent a generation process of different to-be-processed subobjects, a plurality of first sub-intermediate representation instruction sequences may be generated successfully. In this way, more parallel scheduling opportunities are provided for subsequent instruction scheduling of the compilation-side device, so that the finally generated AI accelerator-executable instructions can better utilize the performance of the AI accelerator.

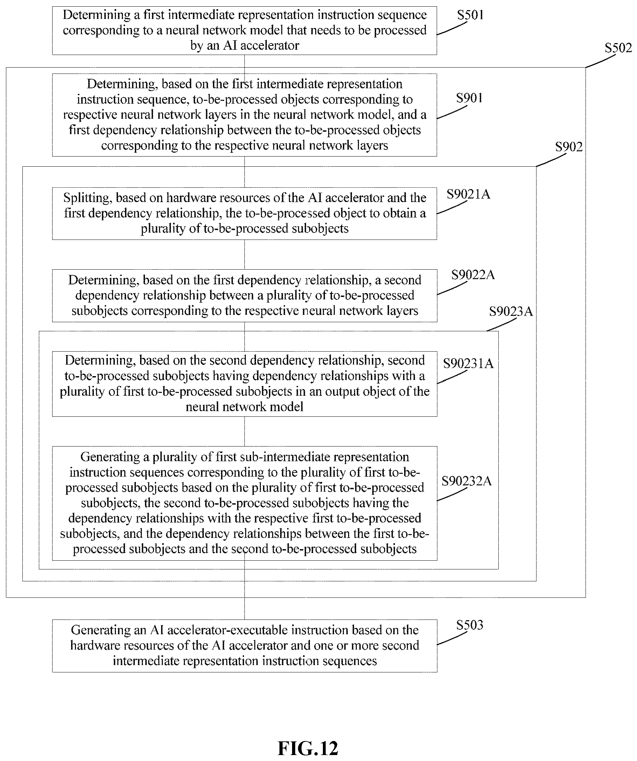

In a possible implementation, referring to FIG. 12 in combination with FIG. 10, S9023A may include S90231A and S90232A.

S90231A. Determining, based on the second dependency relationship, second to-be-processed subobjects having dependency relationships with a plurality of first to-be-processed subobjects in an output object of the neural network model.

The second to-be-processed subobjects having dependency relationships with the first to-be-processed subobjects include to-be-processed subobjects having direct dependency relationships with the first to-be-processed subobjects, and to-be-processed subobjects have indirect dependency relationships with the first to-be-processed subobjects. For example, if the first to-be-processed subobject is obtained through a convolution operation based on a to-be-processed subobject A, while the to-be-processed subobject A is obtained through a pooling operation based on a to-be-processed subobject B, there is an indirect dependency relationship between the to-be-processed subobject B and the first to-be-processed subobject.

For example, the second dependency relationship which is a second dependency relationship shown after S102 is used as an example. The first to-be-processed subobjects include the output 0, the output 1, the output 2, and the output 4.

Second to-be-processed subobjects having dependency relationships with the output 0 include the F3_0, the F3_1, the F2_0, the F2_1, the F2_2, the F1_0, the F1_1, the F1_2, the F1_3, the input 0, the input 1, the input 2, the input 3, and the input 4.

Second to-be-processed subobjects having dependency relationships with the output 1 include the F3_2, the F3_3, the F2_2, the F2_3, the F2_4, the F1_2, the F1_3, the F1_4, the F1_5, the input 2, the input 3, the input 4, the input 5, and the input 6.

Second to-be-processed subobjects having dependency relationships with the output 2 include the F3_4, the F3_5, the F2_4, the F2_5, the F2_6, the F1_4, the F1_5, the F1_6, the F1_7, the input 4, the input 5, the input 6, and the input 7.

Second to-be-processed subobjects having dependency relationships with the output 3 include the F3_6, the F3_7, the F2_6, the F2_7, the F1_6, the F1_7, the input 6, and the input 7.

S90232A. Generating the plurality of first sub-intermediate representation instruction sequences corresponding to the plurality of first to-be-processed subobjects based on the plurality of first to-be-processed subobjects, the second to-be-processed subobjects having the dependency relationships with the respective first to-be-processed subobjects, and the dependency relationships between the first to-be-processed subobjects and the second to-be-processed subobjects.

After S90232A is performed, the compilation-side device has determined that each first to-be-processed subobject of the output object obtained through division is obtained by which to-be-processed subobjects through what operations. To be specific, the dependency relationships between the first to-be-processed subobjects and the second to-be-processed subobjects are determined. On this basis, in combination with the low-level intermediate representation instruction that may be supported by the AI accelerator, the first sub-intermediate representation instruction sequence corresponding to each first to-be-processed subobject may be generated.

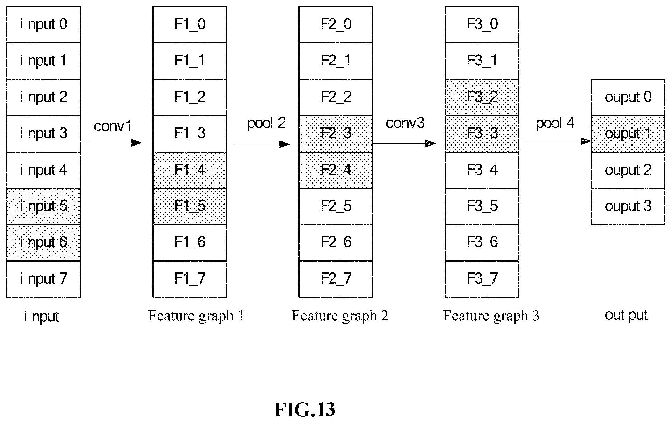

For example, using examples shown after S90231A and the second dependency relationship shown after SS9022A as examples, a total of four iterations may be performed on the output 0-the output 3, to generate four first sub-intermediate representation instruction sequences. A relationship between the to-be-processed subobjects in each to-be-processed object corresponding to each first sub-intermediate representation instruction sequence and an iteration sequence may be shown in FIG. 13. The input 0-the input 4, the F1_0-the F1_3, the F2_0-the F2_2, the F3_0, the F3_1, and the output 0 correspond to a first iteration. The input 5, the input 6, the F1_4, the F1_5, the F2_3, the F2_4, the F3_2, the F3_3, and the output 1 correspond to a second iteration. The input 7, the F1_6, the F1_7, the F2_5, the F2_6, the F3_4, the F3_5, and the output 2 correspond to a third iteration. The F2_7, the F3_6, the F3_7, and the output 3 correspond to a fourth iteration. Four first sub-intermediate representation instruction sequences corresponding to the output 0-the output 3 sequentially are iteration 0, iteration 1, iteration 2, and iteration 3. Specific content is as follows.
# iteration 0
   1. load input_0_to_4; (in this case, 5 SRAMs are required).
   2. conv F1_0_to_3, input_0_to_4; (in this case, 9 SRAMs are required)
   3. pool F2_0_to_2, F1_0_to_3; (in this case, 12 SRAMs are required)
   4. conv F3_0_to_1, F2_0_to_2; (in this case, 14 SRAMs are required)
   5. pool2 output_0, F3_0_to_1; (in this case, 15 SRAMs are required)
   6. store output_0. (In this case, 12 SRAMs that do not need to be occupied in subsequent iterations are released)
# iteration 1
   1. load input_5_to_6; (in this case, the input 4, the input 5, and the input 6 need to be stored, and 3 SRAMs are required).
   2. conv F 1_4_to_5, input_4_to_6; (in this case, F1_3, F1_4, and F1_5 further need to be stored, and a total of 6 SRAMs are required)
   3. pool F2_3_to_4, F1_3_to_5; (in this case, F2_2, F2_3, and F2_4 further need to be stored, and a total of 9 SRAMs are required)
   4. conv F3_2_to_3, F2_2_to_4; (in this case, a total of 11 SRAMs are required)
   5. pool 2 output_1, F3_2_to_3; (in this case, a total of 12 SRAMs are required)
   6. store output_1. (In this case, 9 SRAMs that do not need to be occupied in a next iteration are released)
# iteration 2
   1. load input_7; (in this case, the input 6 and the input 7 need to be stored, and 2 SRAMs are required).
   2. conv F 1_6_to_7, input_6_to_7; (in this case, F1_5, F1_6, and F1_7 further need to be stored, and a total of 5 SRAMs are required)
   3. pool F2_5_to_6, F1_5_to_7; (in this case, F2_4, F2_5, and F2_6 further need to be stored, and a total of 8 SRAMs are required)
   4. conv F3_4_to_5, F2_4_to_6; (in this case, a total of 10 SRAMs are required)
   5. pool 2 output_2, F3_4_to_5; (in this case, a total of 11 SRAMs are required)
   6. store output_2. (In this case, 10 SRAMs that do not need to be occupied in a next iteration are released)
# iteration 3
   1. pool F2_7, F1_7; (in this case, F2_6 and F2_7 further need to be stored, and a total of 2 SRAMs are required)
   2. conv F3_6 _to_7, F2_6_to_7; (in this case, a total of 4 SRAMs are required)
   3. pool 2 output_3, F3_6_to_7; (in this case, a total of 5 SRAMs are required)
   6. store output_3. (In this case, 5 SRAMs that do not need to be occupied are released)

Load A refers to loading A from the DDR into the SRAM; conv Y, X refers to performing a conv convolution operation on X to obtain Y; pool Y, X refers to performing a pool pooling operation on X to obtain Y; pool 2 Y, X refers to performing a pool 2 pooling 2 operation on X to obtain Y; and store Z refers to storing Z into the DDR.

According to the technical solutions corresponding to S90231A and S90232A, interruptions of the code generation process during the compilation process are avoided. In addition, due to absence of data dependencies, instruction sequences generated by different iterations provide more parallel opportunities for subsequent instruction scheduling. Further, the finally generated AI accelerator-executable instruction is enabled to utilize advantages of parallel running instructions of the AI accelerator, and better utilize the performance of the AI accelerator.

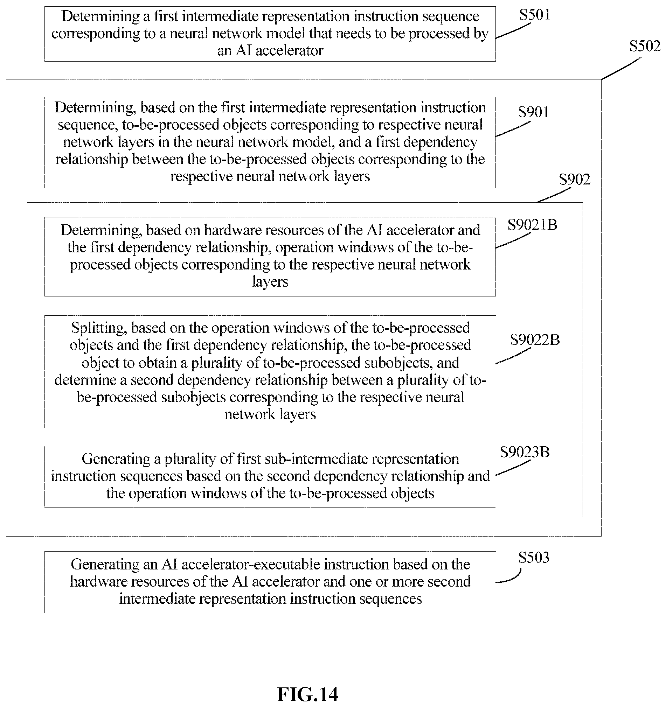

In some embodiments, using the sliding-window code generation manner as an example, referring to FIG. 14 in combination with FIG. 9, S902 may specifically include S9021B-S9023B.

S9021B. Determining, based on the hardware resources of the AI accelerator and the first dependency relationship, operation windows of the to-be-processed objects corresponding to the respective neural network layers.

An objective of splitting the to-be-processed object is to obtain a plurality of sub-operational flows of the neural network model, and each sub-operational flow needs to conform to an original operational flow of the neural network model. Therefore, when determining the operation windows of the to-be-processed objects, it is needed to consider the first dependency relationship corresponding to the operational flow of the neural network model. In addition, whether the plurality of sub-operational flows obtained after the determined operation windows are used may be run successfully depends on whether the hardware resources of the AI accelerator supports requirements of all sub-operational flows.

Further, a basic idea of the sliding-window code generation manner is to dispose an operation window with a fixed size for each to-be-processed object. The size of the operation window needs to ensure that a low-level intermediate representation instruction using the to-be-processed object can complete a valid calculation. As described in the foregoing conditions, a size of a convolution kernel for the conv instruction is 2×2. Therefore, at least two units of data is required to perform a calculation. On this basis, the to-be-processed object input needs to occupy at least two SRAMs to store two units of data. To be specific, a size of an operation window of the input is at least 2 units of data (referred to as 2 for short).

After the sliding windows are determined, each to-be-processed subobject may be split based on the sliding windows to obtain a plurality of to-be-processed subobjects. Subsequently, using the diagram of the operational flow of the neural network model shown in FIG. 8 as an example, at least one operation window is moved sequentially to gradually complete a calculation for the output. Each move needs to ensure that calculations may be performed once on some of the to-be-processed subobjects of a to-be-processed object corresponding to the at least one sliding window, and a new to-be-processed subobject in a to-be-processed object that depends on this to-be-processed object may be calculated. An operational flow that needs to be performed every time the sliding window is moved is a sub-operational flow.

Further, the operation window further needs to ensure that a quantity of storage resources that need to be occupied by contents of all to-be-processed objects participating in operations meets the requirements of the hardware resources of the AI accelerator when all operation windows are so moved that all to-be-processed objects participates in the operations. To be specific, available storage resources in the hardware resources of the AI accelerator meet this quantity.

For example, S9021B is specifically described below by using the following conditions as examples: The first dependency relationship is the dependency relationship indicated in the diagram of the operational flow of the neural network model shown in FIG. 8. In FIG. 8, four to-be-processed objects except the output object output have a same data size, that is, 8 units of data, with an H-dimensional size of 8. A data size of the output may be 4 units of data, and a H-dimensional size is 4.

The computing resources in the hardware resources of the AI accelerator include the conv module, the pool module, the load module, and the store module. The storage resources in the hardware resources of the AI accelerator include 10 SRAMs (or SRAM units) that can store one unit of data. The low-level intermediate representation instructions supported by the AI accelerator include the load instruction, the store instruction, the conv instruction, the pool instruction, and the pool 2 instruction.

It should be noted that the objective of the operation of the neural network model is to obtain the final output object. Therefore, the sliding window corresponding to each to-be-processed object needs to be determined based on the output object.

First, it may be attempted to set a size of the sliding window of the output object to 2 units of data. In this case, the store instruction may store content with a sliding-window size in the output object. If a size of a window of the feature graph 3 is at least 4 units of data, content in the output object with a size of 2 units of data may be obtained through a single execution of the pool 2 instruction. In this way, based on the sliding window of the output object, it may be learned that operation windows of the input, the feature graph 1, and the feature graph 2 are all with a size of 4 units of data.

In this way, when the content with a sliding-window size in the output object is calculated by moving respective operation window, it may be inferred that parts involved in calculations of the input, the feature graph 1, the feature graph 2, and the feature graph 3 all need to occupy 4 SRAMs. In this way, a total of 18 SRAMs need to be occupied. However, this does not match the foregoing quantity of the SRAMs existing in the hardware resources of the AI accelerator in the foregoing conditions. In other words, the hardware resources of the AI accelerator cannot support operations in such situation.

Subsequently, it is deduced by using same logic that, when sizes of operation windows corresponding to the input, the feature graph 1, the feature graph 2, the feature graph 3, and the output respectively are 2, 2, 2, 2, and 1, if content with a sliding-window size of the output is calculated, sizes of contents involved in calculations of the input, the feature graph 1, the feature graph 2, the feature graph 3 are all 2 units of data. In this way, a total of 9 SRAMs need to be occupied, and the hardware resources of the AI accelerator can meet the requirements.

S9022B. Splitting, based on the operation windows of the to-be-processed objects and the first dependency relationship, the to-be-processed object to obtain a plurality of to-be-processed subobjects, and determine a second dependency relationship between a plurality of to-be-processed subobjects corresponding to the respective neural network layers.

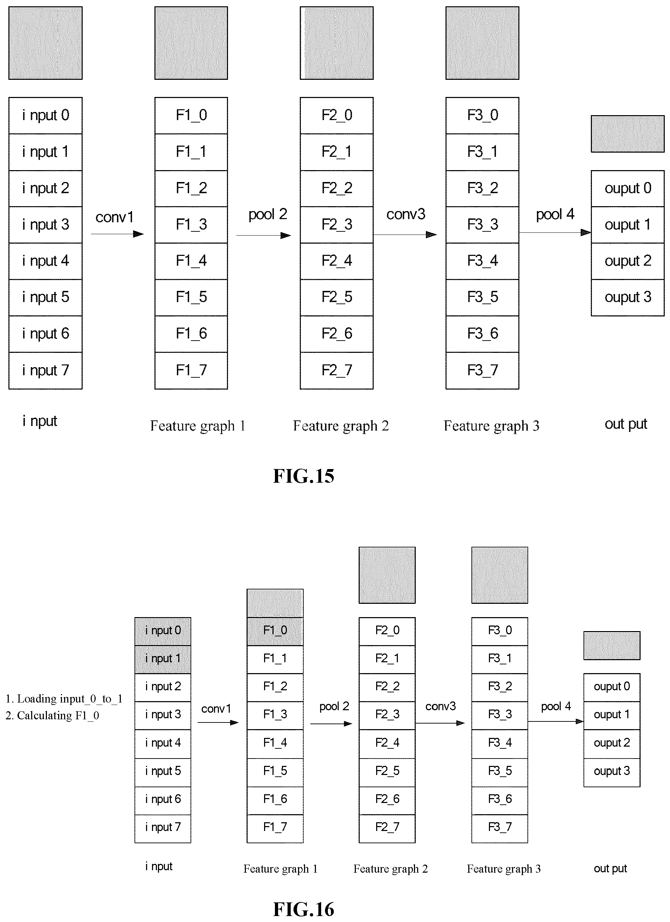

Specifically, after the operation window of each to-be-processed object is determined, each to-be-processed object may be split based on a size of the operation window of the output object. For example, taking the example shown in S9022B as an example, a specific implementation of the split to-be-processed subobject may be shown in FIG. 11. For specific content, reference may be made to the relevant descriptions in the previous embodiments, and details are not described herein again. A correspondence between the operation window and the split to-be-processed subobject may be shown in FIG. 15.

Subsequently, the second dependency relationship between different to-be-processed subobjects may be obtained based on the division result and the first dependency relationship.

For example, if the first dependency relationship is the dependency relationship indicated in the diagram of the operational flow of the neural network model shown in FIG. 8, and the division result of each to-be-processed subobject is shown in FIG. 11, for the second dependency relationship, reference may be made to the relevant descriptions after S9022A, and details are not described herein again.

S9023B. Generating the plurality of first sub-intermediate representation instruction sequences based on the second dependency relationship and the operation windows of the to-be-processed objects.

Specific implementation of S9023B may be moving the operation window to the corresponding to-be-processed object according to a certain rule. Each move needs to enable a to-be-processed subobject covered by each operation window to complete at least one operation (a convolution operation or a pooling operation).

For example, taking that the second dependency relationship is the second dependency relationship shown after S9022B and the operation window of the to-be-processed object is the operation window shown after S9021B (as shown in FIG. 15) as an example, each operation window may be moved ten times to generate ten corresponding first sub-intermediate representation instruction sequences. Specific content is as follows.

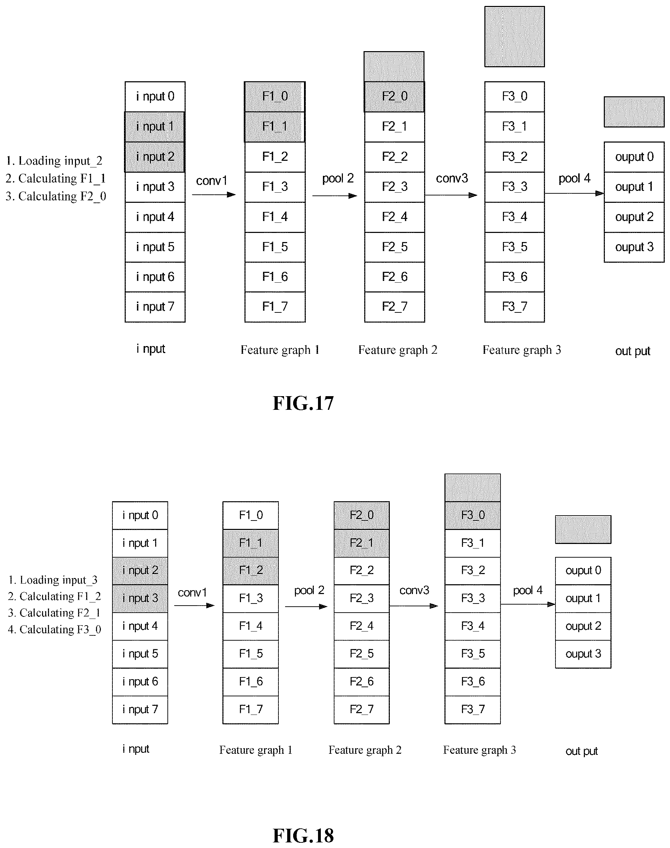

A result after first move may be shown in FIG. 16, and a first sub-intermediate representation instruction sequence generated by this move is as follows.
# input/F1 window slide
   load input_0; (in this case, a total of 1 SRAM is required)
   load input_1; (in this case, a total of 2 SRAMs are required)
   conv F1_0, input_0_to_1. (in this case, a total of 3 SRAMs are required)
   A result after second move may be shown in FIG. 17, and a first sub-intermediate representation instruction sequence generated by this move is as follows.
# input/F1/F2 window slide
   load input_2; (in this case, if SRAMs occupied by the input 0 are released, a total of 3 SRAMs are required)
   conv F1_1, input_1_to_2; (in this case, a total of 4 SRAMs are required)
   pool F2_0, F1_0_to_1. (in this case, 5 SRAMs are required)
   A result after third move may be shown in FIG. 18, and a first sub-intermediate representation instruction sequence that may be generated by this move is as follows.
# input/F1/F2/F3 window slide
   load input_3; (in this case, a total of 5 SRAMs are required for releasing)
   conv F1_2, input_2_to_3; (in this case, a total of 5 SRAMs are required)
   pool F2_1, F1_1_to_2; (in this case, a total of 6 SRAMs are required)
   conv F3_0, iF2_0_to_1. (in this case, a total of 7 SRAMs are required)

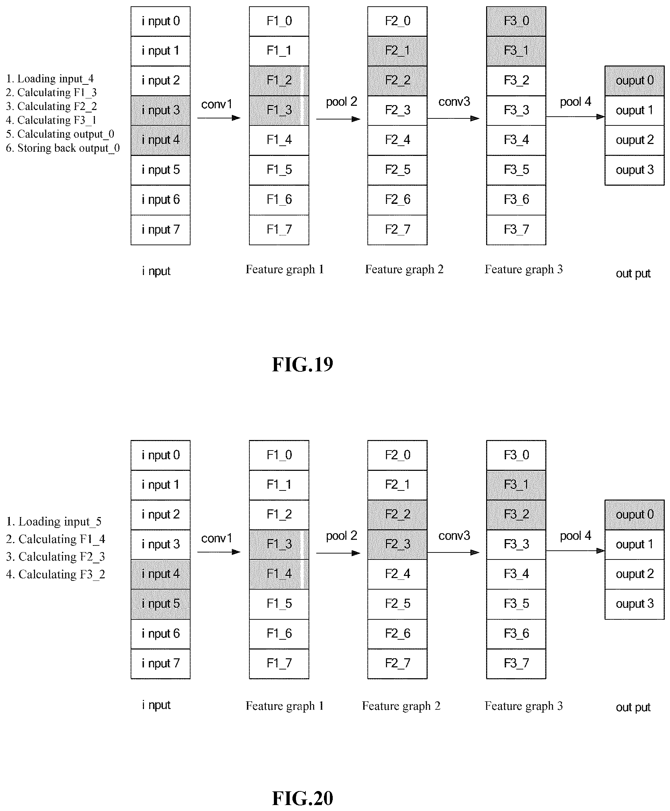

A result after fourth move may be shown in FIG. 19, and a first sub-intermediate representation instruction sequence that may be generated by this move is as follows.
# input/F1/F2/F3/output window slide
load input_4; (in this case, a total of 7 SRAMs are required)
conv F1_3, input_3_to_4; (in this case, a total of 7 SRAMs are required)
pool F2_2, F1_2_to_3; (in this case, a total of 7 SRAMs are required)
conv F3_1, F2_1_to_2; (in this case, a total of 8 SRAMs are required)
pool 2 output_0, F3_0_to_1; (in this case, a total of 9 SRAMs are required)
store output_0. (in this case, a total of 8 SRAMs are required)

A result after fifth move may be shown in FIG. 20, and a first sub-intermediate representation instruction sequence generated by this move is as follows.
# input/F1/F2/F3 window slide
load input_5; (in this case, a total of 8 SRAMs are required)
conv F1_4, input_4_to_5; (in this case, a total of 8 SRAMs are required)
pool F2_3, F1_3_to_4; (in this case, a total of 8 SRAMs are required)
conv F3_2, F2_2_to_3. (in this case, a total of 8 SRAMs are required)

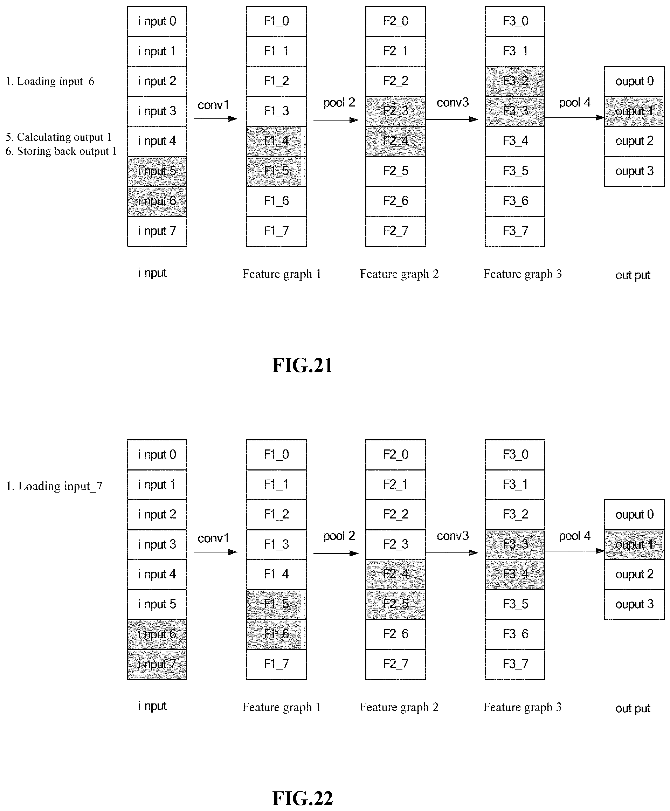

A result after sixth move may be shown in FIG. 21, and a first sub-intermediate representation instruction sequence generated by this move is as follows.
# input/F1/F2/F3/output window slide
load input_6; (in this case, a total of 8 SRAMs are required)
conv F1_5, input_5_to_6; (in this case, a total of 8 SRAMs are required)
pool F2_4, F1_4_to_5; (in this case, a total of 8 SRAMs are required)
conv F3_3, F2_3_to_4. (in this case, a total of 8 SRAMs are required)
pool 2 output_1, F3_2_to_3; (in this case, a total of 9 SRAMs are required)
store output_1. (in this case, a total of 8 SRAMs are required)

A result after seventh move may be shown in FIG. 22, and a first sub-intermediate representation instruction sequence generated by this move is as follows.
# input/F1/F2/F3 window slide
load input_7; (in this case, a total of 8 SRAMs are required)
conv F1_6, input_6_to_7; (in this case, a total of 8 SRAMs are required)
pool F2_5, F1_5_to_6; (in this case, a total of 8 SRAMs are required)
conv F3_4, F2_4_to_5. (in this case, a total of 8 SRAMs are required)

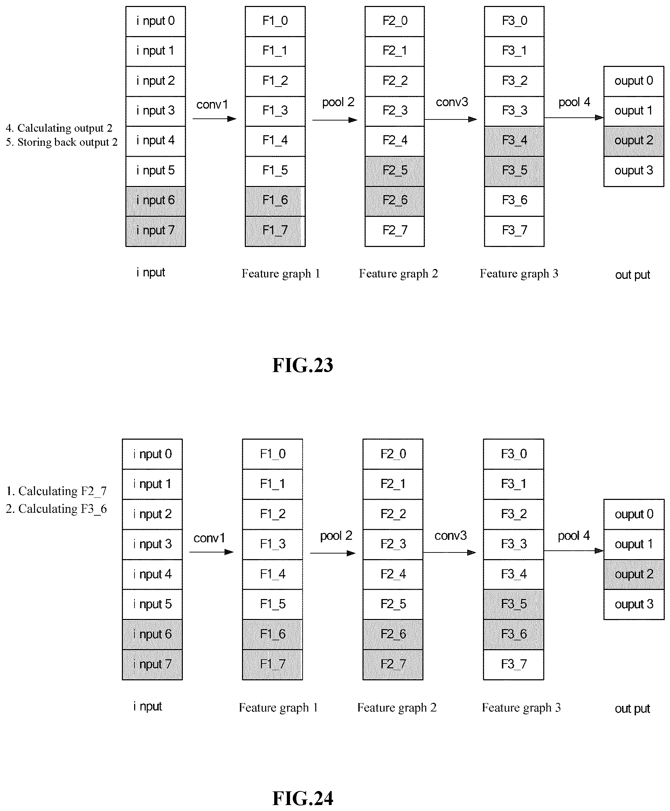

A result after eighth move may be shown in FIG. 23, and a first sub-intermediate representation instruction sequence generated by this move is as follows.
# F1/F2/F3 /output window slide
conv F1_7, input_7; (in this case, a total of 7 SRAMs are required)
pool F2_6, F1_6_to_7; (in this case, a total of 7 SRAMs are required)
conv F3_5, F2_5_to_6; (in this case, a total of 7 SRAMs are required)
pool 2 output_2, F3_4_to_5; (in this case, a total of 8 SRAMs are required)
store output_2. (in this case, a total of 7 SRAMs are required)

A result after ninth move may be shown in FIG. 24, and a first sub-intermediate representation instruction sequence generated by this move is as follows.
# F2/F3 window slide
pool F2_7, F1_7; (in this case, a total of 5 SRAMs are required)
conv F3_6, F2_6_to_7; (in this case, a total of 5 SRAMs are required)

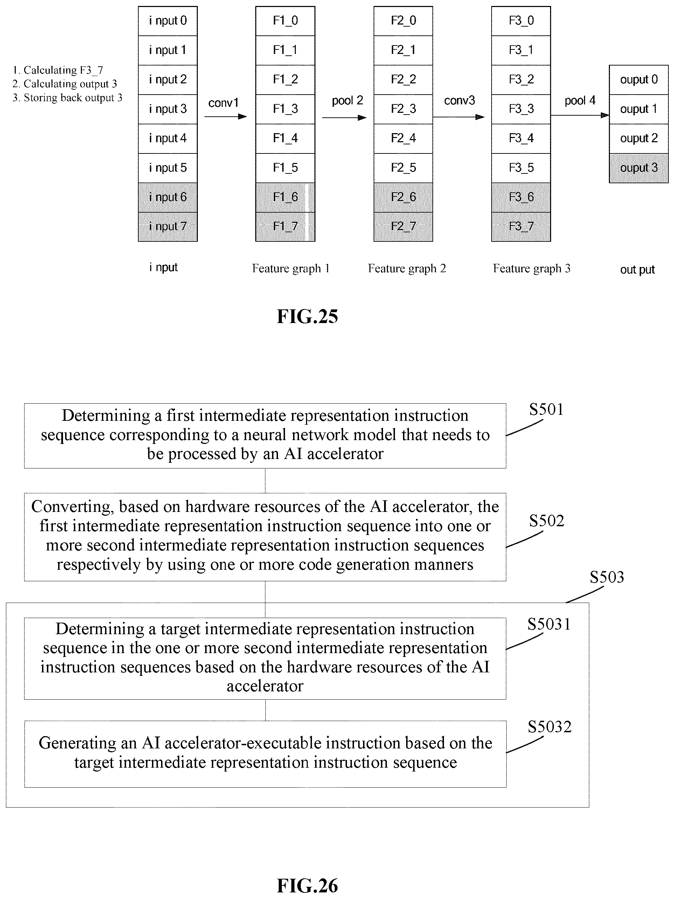

A result after tenth move may be shown in FIG. 25, and a first sub-intermediate representation instruction sequence generated by this move is as follows.
# F3/output window slide
conv F3_7, F2_7; (in this case, a total of 3 SRAMs are required)
pool 2 output_3, F3_6_to_7; (in this case, a total of 4 SRAMs are required)
store output_3. (In this case, 4 occupied SRAMs are all released)

It may be learned that the foregoing ten sliding operations of the operation window may generate ten first sub-intermediate representation instruction sequences. Instructions in different first sub-intermediate representation instruction sequences have more opportunities for parallel execution due to absence of dependencies. Thus, an advantage of the AI accelerator for running instructions in parallel may be utilized. Further, compared to the technical solutions corresponding to S9021A-S9023A, this technical solution requires less storage resources (such as SRAMs) of the AI accelerator (at most 9 SRAMs are required at the same time), which saves more resources of the AI accelerator (or may be referred to as having a higher resource utilization rate for the AI accelerator).

According to the technical solutions corresponding to S9021B-S9023B, the operation window of each to-be-processed object that meets a quantity of the hardware resources may be determined based on the hardware resources and the first dependency relationship. Subsequently, based on the operation window and the first dependency relationship, the to-be-processed object may be split, and the second dependency relationship may be determined. Because the second dependency relationship may represent a generation process of different to-be-processed subobjects, a plurality of first sub-intermediate representation instruction sequences may be generated successfully. In this way, interruption of the code generation process during the compilation process is avoided, and more parallel scheduling opportunities are also provided for subsequent instruction scheduling of the compilation-side device, so that the finally generated AI accelerator-executable instruction can better utilize the performance of the AI accelerator.

In some embodiments, referring to FIG. 26 in combination with FIG. 5, S503 may specifically include S5031 and S5032.

S5031. Determining a target intermediate representation instruction sequence in the one or more second intermediate representation instruction sequences based on the hardware resources of the AI accelerator.

To achieve a highest performance utilization rate of the finally generated AI accelerator-executable instruction for the performance of the AI accelerator, it is needed to select a most effective one from the one or more second intermediate representation instruction sequences to serve as the target intermediate representation instruction sequence. Subsequently, the target intermediate representation instruction sequence serves as basis for generating the AI accelerator-executable instruction.

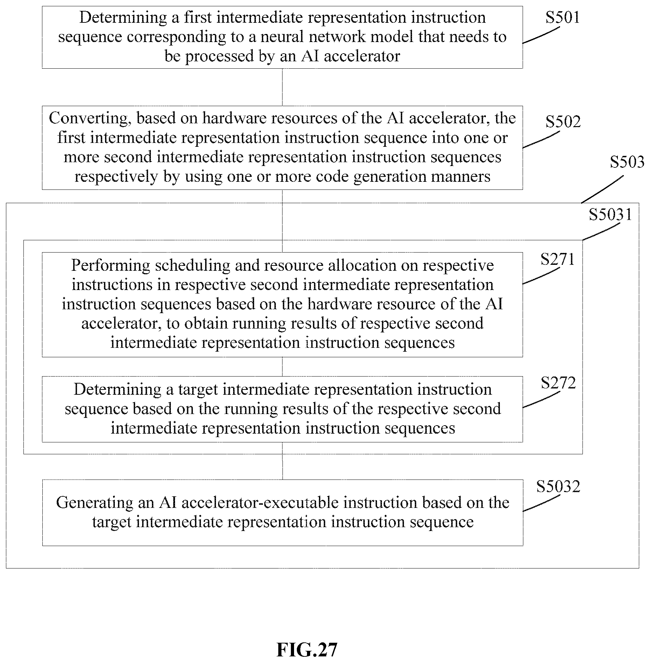

In a possible implementation, referring to FIG. 27 in combination with FIG. 26, S5031 may include S271 and S272.

S271. Performing scheduling and resource allocation on respective instructions in respective second intermediate representation instruction sequences based on the hardware resources of the AI accelerator, to obtain running results of respective second intermediate representation instruction sequences.

Referring to FIG. 6 in combination with FIG. 2, after a plurality of code generation ways are used on the compilation-side device to generate a plurality of second intermediate representation instruction sequences (such as the instruction sequence 1, the instruction sequence 2, and the instruction sequence 3), scheduling and resource allocation, that is, joint optimization, may be performed on the instructions in respective second intermediate representation instruction sequences based on the hardware resources of the AI accelerator. As shown in FIG. 6, the joint optimization may specifically include code generation 2031, pre-scheduling 2032, resource allocation 2033, and result collection and selection 2034.

In the embodiments of this disclosure, to make the pre-scheduling and the resource allocation have better effects and to have a higher performance utilization rate for the AI accelerator, the pre-scheduling and the resource allocation may be performed in cooperation based on the hardware resources of the AI accelerator. To be specific, the resource allocation is performed while the pre-scheduling is performed. In this way, the pre-scheduling and the resource allocation rely on each other during running or solution, so that a better pre-scheduling result and a better resource allocation result may be obtained.

In addition, because the one or more second intermediate representation instruction sequences are generated in one or more code generation ways, results obtained by performing same pre-scheduling and resource allocation on different second intermediate representation instruction sequences inevitably differ. It is possible that the resource allocation cannot be completed on some of the second intermediate representation instruction sequences, and some second intermediate representation instruction sequences on which the resource allocation are completed have, after being run, different utilization degrees for the performance of the AI accelerator. The second intermediate representation instruction sequences on which the resource allocation cannot be completed may be abandoned directly. For a plurality of second intermediate representation instruction sequences on which the resource allocation is completed, virtual running may be performed while the pre-scheduling and the resource allocation are performed, so as to obtain the running results.

Finally, in the result collection and selection process, a second intermediate representation instruction sequence having an optimal running result is selected, based on the running results, from the plurality of second intermediate representation instruction sequences on which the resource allocation is completed, to serve as the target intermediate representation instruction sequence. In other words, S272 is performed.

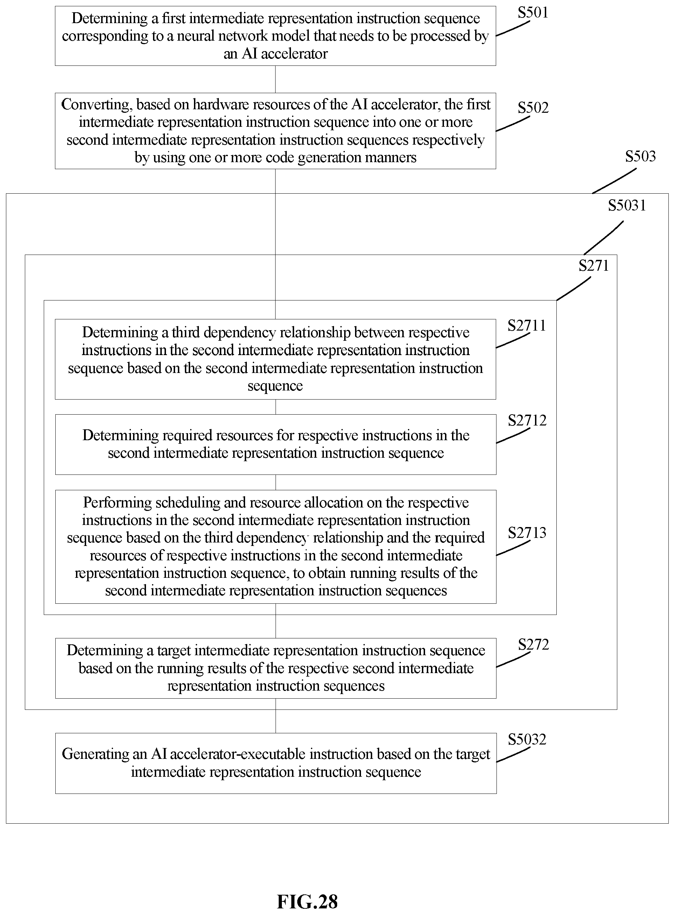

In some embodiments, referring to FIG. 28 in combination with FIG. 27, S271 may specifically include S2711-S2713.

S2711. Determining a third dependency relationship between the respective instructions in the second intermediate representation instruction sequence based on the second intermediate representation instruction sequence.

Taking that the storage resources in the hardware resources of the AI accelerator comprise SRAM as an example, an objective of scheduling the instructions in the second intermediate representation instruction sequence is to make the entire second intermediate representation instruction sequence be fully parallelized on the AI accelerator, so as to better utilize the performance of the AI accelerator. At the same time, it is needed to allocate different SRAMs (also referred to as SRAM resources) to tensors corresponding to several parallel instructions, so as to avoid a situation in which instructions that could have been parallelized cannot be parallelized due to resource conflicts caused because the tensors use a same SRAM, which affects the performance of the AI calculator.

On this basis, to make the instructions of the entire second intermediate representation instruction sequence fully parallelized on the AI accelerator, it is needed to first determine a dependency relationship, that is, the third dependency relationship, between the respective instructions in the second intermediate representation instruction sequence. For example, a certain conv instruction needs to perform convolution on the input 0 and the input 1 of the feature graph to obtain F1_0. Another load instruction needs to load the input 0 and the input 1 from the DDR into the SRAM. In this case, there is a dependency relationship between the load instruction and the conv instruction, that is, the conv instruction relies on the load instruction. The load instruction is a successor instruction to the load instruction, and the load instruction is a predecessor instruction to the conv instruction. Other instructions are similar.

In some embodiments, the third dependency relationship may be represented in a form of a graph, which may be referred to as an instruction dependency graph.

S2712. Determining required resources for each instruction in the second intermediate representation instruction sequence.

The required resources of a certain instruction specifically refer to specific requirements of the instruction for the computing resources and the storage resources of the AI accelerator. For example, a certain conv instruction needs to use a computing resource, that is, the conv module, in the AI accelerator, and also needs to use three SRAMs in the AI accelerator.

Certainly, to perform the pre-scheduling and the resource allocation jointly, in addition to determining the required resources for each instruction in the second intermediate representation instruction sequence, it is also needed to determine the hardware resources of the AI accelerator, that is, to determine available hardware resources (which may specifically include computing resources and storage resources) of the AI accelerator.

In this way, scheduling and resource allocation may be performed on the respective instructions in the second intermediate representation instruction sequence based on the third dependency relationship, the required resources of each instruction, and the available hardware resources of the AI accelerator, to obtain the running results of the second intermediate representation instruction sequences. In other words, S2713 is performed.

S2713. Performing scheduling and resource allocation on the respective instructions in the second intermediate representation instruction sequence based on the third dependency relationship and the required resources of each instruction in the second intermediate representation instruction sequence, to obtain the running results of the second intermediate representation instruction sequences.

According to the technical solutions corresponding to S2711-S2713, the third dependency relationship and the required resources of each instruction may be determined first. Because the third dependency relationship may reflect which one of the instructions is executed first and which one is executed later, a more appropriate manner may be used for pre-scheduling and resource allocation based on the third dependency relationship and the required resources of each instruction, so as to obtain the running results of the second intermediate representation instruction sequences. Further, the target intermediate representation instruction sequence may be selected based on the running results of different second intermediate representation instruction sequences, to obtain an executable instruction that can better utilize the performance of the AI accelerator.

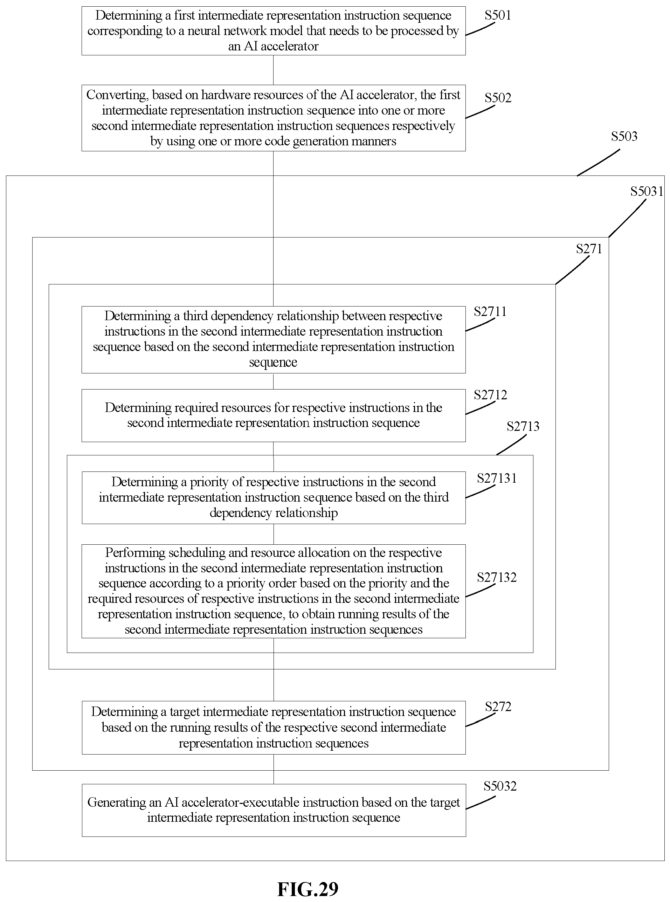

In some embodiments, referring to FIG. 29 in combination with FIG. 28, S2713 may specifically include S27131 and S27132.

S27131. Determining a priority of each instruction in the second intermediate representation instruction sequence based on the third dependency relationship.

Specifically, in the third dependency relationship, a higher execution order of an instruction indicates a higher priority. If execution orders of two instructions are the same, it may be considered that two priorities are the same, or the priorities of the two instructions may be determined in combination with the required resources of the two instructions, or the priorities of the two instructions may be determined in any feasible way.

S27132. Performing scheduling and resource allocation on the respective instructions in the second intermediate representation instruction sequence according to a priority order based on the priority and the required resources of each instruction in the second intermediate representation instruction sequence, to obtain the running results of the second intermediate representation instruction sequences.

In an implementation, S27132 may specifically include the following steps.
1. Determining an instruction in the second intermediate representation instruction sequence that does not have a predecessor instruction as a to-be-scheduled instruction.
   Specifically, instructions that do not have predecessor instructions may be constructed as a set of to-be-scheduled instruction, that is, ready_nodes, according to priorities.
2. Based on a priority order of all to-be-scheduled instructions, the required resources of each to-be-scheduled instruction, and the hardware resources of the AI accelerator, determining instructions to be run one by one and run the same after hardware resources are allocated, so as to obtain a sub-running result of each to-be-scheduled instruction.

Specifically, a set of running instructions, that is, running_nodes, may be established first. In an initial case, the set of running instructions is empty.

Subsequently, according to the priority order of the to-be-scheduled instructions, required hardware resources are allocated to the to-be-scheduled instructions one by one.

If required hardware resources may be allocated to a certain to-be-scheduled instruction, the to-be-scheduled instruction is determined as a running instruction, which is removed from the set of to-be-scheduled instructions and is added to the set of running instructions. At the same time, the running instructions in the set of running instructions may be run virtually.

If required hardware resources cannot be allocated to a certain to-be-scheduled instruction, the to-be-scheduled instruction is skipped, and it is attempted to allocate required hardware resources to a to-be-scheduled instruction with a lower priority.

In this process, a computing resources table (CRT) and a storage resource table (SRT) may be established. The CRT and the SRT may be updated in a real-time manner when hardware resources are allocated to a to-be-scheduled instruction. The CRT includes an allocation situation of all available computing resources in the AI accelerator, which may specifically include time when any computing resource is allocated to which instruction. The SRT includes an allocation situation of all available storage resources in the AI accelerator, which may specifically include time when any storage resource is allocated to which instruction. The compilation-side device may determine, based on the SRT and the CRT, whether required hardware resources may be allocated to a certain to-be-scheduled instruction.

3. Each time running of the running instruction ends, determining a new to-be-scheduled instruction based on the third dependency relationship.

Specifically, when running of a certain running instruction in the set of running instructions ends, a successor node of the running instruction may be determined as a to-be-scheduled instruction to be added to the set of to-be-scheduled instructions for processing. Meanwhile, it is also needed to update the CRT and the SRT synchronously.

It should be noted that running of the running instruction herein is specifically virtual running in the AI accelerator.

4. Determining a set of sub-running results corresponding to each instruction in the second intermediate representation instruction sequence as a running result of the second intermediate representation instruction sequence.

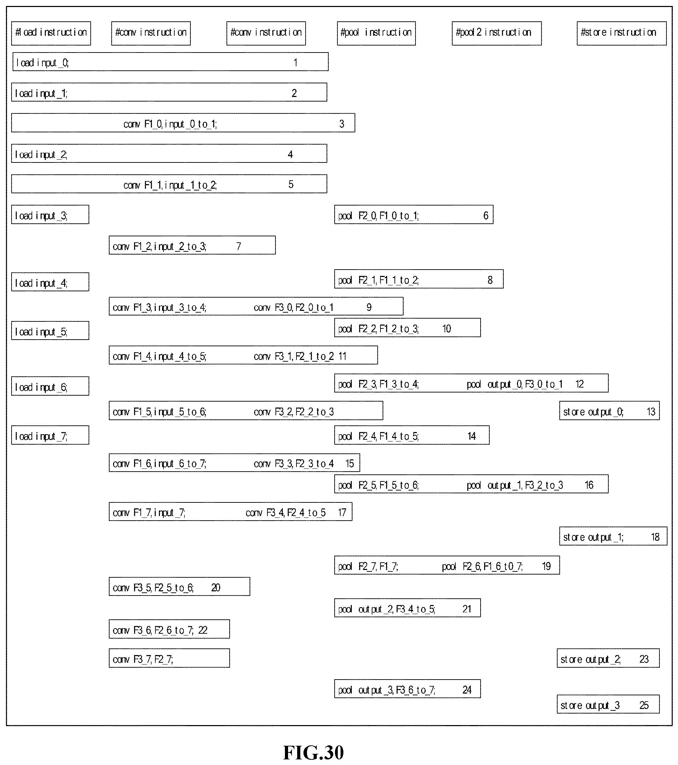

For example, taking the second intermediate representation instruction sequence composed of a plurality of first sub-intermediate representation instruction sequences shown after S9023B in the foregoing embodiments as an example, after the technical solution corresponding to S27132 is implemented, reference may be made to FIG. 30 for the obtained running result.

Assuming that running of each instruction requires one time unit, referring to FIG. 30, it may be learned that according to the technical solutions provided in this disclosure, the pre-scheduling and the resource allocation are performed in cooperation. Therefore, in a finally obtained running result, there may be a plurality of parallel instructions in each time unit, and a total of 25 time units are required to complete execution of all instructions. However, this cannot be achieved in a case in which parallel opportunities are reduced when the pre-scheduling and the resource allocation are performed separately.

According to the technical solutions corresponding to S27131 and S27132, the priority of each instruction in the second intermediate representation instruction sequence may be obtained based on the third dependency relationship, and a higher priority indicates that scheduling and resource allocation need to be performed on the corresponding instruction earlier. Instructions with similar or equal priorities may be run in parallel. Therefore, according to this scheme, instruction scheduling and resource allocation may be completed successfully based on the priority and the required resources, to obtain the running result of the second intermediate representation instruction sequence. In this way, compilation interruptions during joint optimization of the pre-scheduling and the resource allocation by the compilation-side device are avoided, so that compilation efficiency is improved.

S272. Determining the target intermediate representation instruction sequence based on the running results of the respective second intermediate representation instruction sequences.

S272 may specifically be result collection and selection 2034 shown in FIG. 6. Specifically, as shown in FIG. 6, when the result collection and selection 2034 is performed, the running results of the respective second intermediate representation instruction sequences may be collected first, and then whether each running result is successful is determined. The process ends if the running result is not successful, and result selection is performed if the running result is successful.

Specifically, the result selection may be: After the running results of the respective second intermediate representation instruction sequences are obtained, effect parameters, such as running time, and a number of visits, corresponding to the running result of each second intermediate representation instruction sequence may be obtained.

A performance utilization coefficient of the running result may be obtained based on these effect parameters. For example, the performance utilization coefficient may be a weighted average value obtained by normalizing the running time and the number of visits. A larger performance utilization coefficient indicates a better running result, and thus a corresponding second intermediate representation instruction sequence may better utilize the performance of the AI accelerator.

Finally, the second intermediate representation instruction sequence having a best performance utilization coefficient (which may be, for example, maximum or minimum) of the running result may be determined as the target intermediate representation instruction sequence.

According to the technical solutions corresponding to S271 and S272, scheduling and resource allocation may be simultaneously performed on the respective instructions in the second intermediate representation instruction sequence to obtain the running results of all the second intermediate representation instruction sequences, so as to determine the target intermediate representation instruction sequence. In this way, the target intermediate representation instruction sequence with bests effects may be used as basis for generating the AI accelerator-executable instruction. Thus, the performance of the AI accelerator may be better utilized.

S5032. Generating the AI accelerator-executable instruction based on the target intermediate representation instruction sequence.

Specifically, as shown in FIG. 6, after the target intermediate representation instruction sequence is obtained, post scheduling may be performed on the target intermediate representation instruction sequence first. For specific implementation of the post scheduling, reference may be made to the relevant descriptions in the previous embodiments, and details are not described herein again.

After the post scheduling is completed, an assembly technology may be used to convert the target intermediate representation instruction sequence into a machine language instruction. In other words, the AI accelerator-executable instruction is actually executed by the AI accelerator.

According to the technical solutions corresponding to S5031 and S5032, the target intermediate representation instruction sequence with better effects may be selected from the plurality of second intermediate representation instruction sequences to generate the AI accelerator-executable instruction, so that the finally obtained AI accelerator-executable instruction may better utilize the performance of the AI accelerator.

It may be understood that, to implement the foregoing functions, the foregoing electronic apparatus includes corresponding hardware structures and/or software modules for implementing the various functions. A person skilled in the art should easily conceive that, in combination with the units and algorithm steps described in the embodiments of this disclosure, the embodiments of this disclosure can be implemented in a form of hardware or a combination of hardware and computer software. Whether a certain function is implemented in a form of hardware or computer software driven hardware depends on specific application and design constraints of the technical solutions. A person skilled in the art may use different methods to implement the described functions for each specific application, but such implementation should not be considered beyond the scope of the embodiments of this disclosure.

### Exemplary device

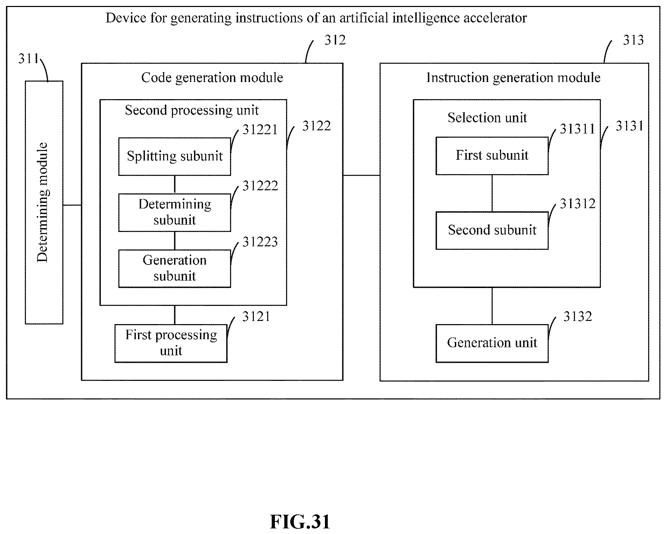

When various functional modules are divided according to corresponding functions, a device for generating instructions of an artificial intelligence accelerator is further provided according to the embodiments of this disclosure . FIG. 31 is a schematic diagram of a structure of a device for generating instructions of an artificial intelligence accelerator according to an embodiment of this disclosure. The device may include a determining module 311, a code generation module 312, and an instruction generation module 313.

The determining module 311 is configured to determine a first intermediate representation instruction sequence corresponding to a neural network model that needs to be processed by an artificial intelligence AI accelerator.

The code generation module 312 is configured to convert, based on hardware resources of the AI accelerator, the first intermediate representation instruction sequence determined by the determining module 311 into one or more second intermediate representation instruction sequences respectively in one or more code generation ways.

The instruction generation module 313 is configured to generate an AI accelerator-executable instruction based on the hardware resources of the AI accelerator and the one or more second intermediate representation instruction sequences converted by the code generation module 312.

In some embodiments, the code generation module 312 may specifically include a first processing unit 3121 and a second processing unit 3122. The first processing unit 3121 is configured to determine, based on the first intermediate representation instruction sequence determined by the determining module 311, to-be-processed objects corresponding to respective neural network layers in the neural network model, and a first dependency relationship between the to-be-processed objects corresponding to the respective neural network layers. The second processing unit 3122 is configured to generate, based on the hardware resources of the AI accelerator and the first dependency relationship determined by the first processing unit 3121, a plurality of first sub-intermediate representation instruction sequences included in a third intermediate representation instruction sequence in the one or more second intermediate representation instruction sequences.

In some embodiments, the second processing unit 3122 includes a splitting subunit 31221, a determining subunit 31222, and a generation subunit 31223. The splitting subunit 31221 is configured to split, based on the hardware resources of the AI accelerator and the first dependency relationship determined by the first processing unit 3121, the to-be-processed object to obtain a plurality of to-be-processed subobjects. The determining subunit 31222 is configured to determine, based on the first dependency relationship, a second dependency relationship between a plurality of to-be-processed subobjects corresponding to the respective neural network layers. The generation subunit 31223 is configured to generate the plurality of first sub-intermediate representation instruction sequences based on the second dependency relationship determined by the determining subunit 31222.

In some embodiments, the generation subunit 31223 is specifically configured to: determine, based on the second dependency relationship, second to-be-processed subobjects having dependency relationships with a plurality of first to-be-processed subobjects in an output object of the neural network model; and generate the plurality of first sub-intermediate representation instruction sequences corresponding to the plurality of first to-be-processed subobjects based on the plurality of first to-be-processed subobjects, the second to-be-processed subobjects having the dependency relationships with the respective first to-be-processed subobjects, and the dependency relationships between the first to-be-processed subobjects and the second to-be-processed subobjects.

In some embodiments, the determining subunit 31222 is configured to determine, based on the hardware resources of the AI accelerator and the first dependency relationship, operation windows of the to-be-processed objects corresponding to the respective neural network layers. The splitting subunit 31221 is configured to split, based on the operation windows of the to-be-processed objects that are determined by the determining subunit 31222 and the first dependency relationship, the to-be-processed object to obtain a plurality of to-be-processed subobjects, and determine the second dependency relationship between the plurality of to-be-processed subobjects corresponding to the respective neural network layers. The generation subunit 31223 is configured to generate the plurality of first sub-intermediate representation instruction sequences based on the second dependency relationship determined by the splitting subunit 31221 and the operation windows of the to-be-processed objects that are determined by the determining subunit 31222.

In some embodiments, the first processing unit 3121 is further configured to determine an operational flow of the neural network model based on the first intermediate representation instruction sequence. The second processing unit 3122 is further configured to generate a fourth intermediate representation instruction sequence in the one or more second intermediate representation instruction sequences based on the hardware resources of the AI accelerator and the operational flow of the neural network model that is determined by the first processing unit 3121.

In some embodiments, the instruction generation module 313 includes a selection unit 3131 and a generation unit 3132. The selection unit 3131 is configured to determine, based on the hardware resources of the AI accelerator, a target intermediate representation instruction sequence in the one or more second intermediate representation instruction sequences that are determined by the code generation module 312. The generation unit 3132 is configured to generate the AI accelerator-executable instruction based on the target intermediate representation instruction sequence selected by the selection unit 3131.

In some embodiments, the selection unit 3131 includes a first subunit 31311 and a second subunit 31312. The first subunit 31311 is configured to perform, based on the hardware resources of the AI accelerator, scheduling and resource allocation on respective instructions in respective second intermediate representation instruction sequences generated by the code generation module 312, to obtain running results of respective second intermediate representation instruction sequences. The second subunit 31312 is configured to determine the target intermediate representation instruction sequence based on the running results of the respective second intermediate representation instruction sequences that are obtained by the first subunit 31311.

In some embodiments, the first subunit 31311 is specifically configured to: determine a third dependency relationship between the respective instructions in the second intermediate representation instruction sequence based on the second intermediate representation instruction sequence; determine required resources for each instruction in the second intermediate representation instruction sequence; and perform scheduling and resource allocation on the respective instructions in the second intermediate representation instruction sequence based on the third dependency relationship and the required resources of each instruction in the second intermediate representation instruction sequence, to obtain the running results of the second intermediate representation instruction sequences.

In some embodiments, when performing scheduling and resource allocation on the respective instructions in the second intermediate representation instruction sequence based on the third dependency relationship and the required resources of each instruction in the second intermediate representation instruction sequence, to obtain the running results of the second intermediate representation instruction sequences, the first subunit 31311 is specifically configured to: determine a priority of each instruction in the second intermediate representation instruction sequence based on the third dependency relationship; and perform scheduling and resource allocation on the respective instructions in the second intermediate representation instruction sequence according to a priority order based on the priority and the required resources of each instruction in the second intermediate representation instruction sequence, to obtain the running results of the second intermediate representation instruction sequences.

Regarding the device for generating instructions of an artificial intelligence accelerator in the foregoing embodiments, specific ways for various modules to perform operations and corresponding beneficial effects have been described in detail in the foregoing embodiments of the device for generating instructions of an artificial intelligence accelerator, and details are not described herein again.

### Exemplary electronic apparatus

An electronic apparatus is further provided according to this disclosure. The electronic apparatus may be the foregoing device for generating instructions of an artificial intelligence accelerator, or may be a terminal or a server including the device for generating instructions of an artificial intelligence accelerator. The electronic apparatus includes a processor and a memory. The memory is configured to store a processor-executable instruction. The processor may implement functions of various modules in the device for generating instructions of an artificial intelligence accelerator in the foregoing embodiments. The memory stores at least one instruction, which is loaded and executed by the processor to implement the method for generating instructions of an artificial intelligence accelerator provided in the foregoing embodiments.

The memory may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute one or more of the program instructions to implement the method for generating instructions of an artificial intelligence accelerator according to various embodiments of this disclosure that are described above.

In some embodiments, the electronic apparatus may further include an input device and an output device. These components are connected with each other through a bus system and/or another form of connection mechanism. The input device may include devices such as a keyboard and a mouse, for a user to input information. The output device may output various information to the outside, and may include, for example, a display, a speaker, a printer, a communication network, and a remote output device connected by the communication network. In addition, according to specific application situations, the electronic apparatus 10 may further include any other appropriate components.

### Exemplary computer program product and computer readable storage medium

In addition to the foregoing method and device, the embodiments of this disclosure may also relate to a computer program product, which includes computer program instructions. When the computer program instructions are run by a processor, the processor is enabled to perform the steps, of the method for generating instructions of an artificial intelligence accelerator according to the embodiments of this disclosure, that are described in the "exemplary method" part of this specification.

In addition to the foregoing methods and devices, a computer program product may also be provided, which includes computer program instructions, according to the embodiments of this disclosure. When the computer program instructions are run by a processor, the processor is enabled to perform the steps, of the method for generating instructions of an artificial intelligence accelerator according to the embodiments of this disclosure, that are described in the "exemplary method" part described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by a processor, the processor is enabled to perform the steps, of the method for generating instructions of an artificial intelligence accelerator according to the embodiments of this disclosure, that are described in the "exemplary method" part described above.

The computer readable storage medium may be one readable medium or any combination of a plurality of readable media. The readable medium may be a readable signal medium or a readable storage medium. The readable storage medium includes, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

## Claims

1. A method for generating instructions of an artificial intelligence accelerator, wherein the method comprises:
determining (S501) a first intermediate representation instruction sequence corresponding to a neural network model that needs to be processed by an artificial intelligence (AI) accelerator, wherein the first intermediate representation instruction sequence is a high-level intermediate representation instruction sequence corresponding to the neural network model;
converting (S502), based on a hardware resources of the AI accelerator, the first intermediate representation instruction sequence into one or more second intermediate representation instruction sequences respectively in one or more code generation ways, wherein the one or more second intermediate representation instruction sequences are low-level intermediate representation instruction sequences corresponding to the neural network model;
performing (S271) scheduling and resource allocation on each instruction in the respective second intermediate representation instruction sequences based on the hardware resources of the AI accelerator, to obtain running results of the respective second intermediate representation instruction sequences;
determining (S272) a target intermediate representation instruction sequence among one or more second intermediate representation instruction sequences based on the running results of the respective second intermediate representation instruction sequences; and
generating (S5032) the AI accelerator-executable instruction based on the target intermediate representation instruction sequence.

2. The method according to claim 1, wherein the converting, based on a hardware resources of the AI accelerator, the first intermediate representation instruction sequence into one or more second intermediate representation instruction sequences respectively in one or more code generation ways comprises:
determining (S901), based on the first intermediate representation instruction sequence, to-be-processed objects corresponding to respective neural network layers in the neural network model, and a first dependency relationship between the to-be-processed objects corresponding to the respective neural network layers; and
generating (S902), based on the hardware resources of the AI accelerator and the first dependency relationship, a plurality of first sub-intermediate representation instruction sequences included in a third intermediate representation instruction sequence in the one or more second intermediate representation instruction sequences.

3. The method according to claim 2, wherein the generating, based on the hardware resources of the AI accelerator and the first dependency relationship, the plurality of first sub-intermediate representation instruction sequences included in the third intermediate representation instruction sequence comprises:
Splitting (S9021A), based on the hardware resources of the AI accelerator and the first dependency relationship, each of the to-be-processed objects to obtain a plurality of to-be-processed subobjects;
determining (S9022A), based on the first dependency relationship, a second dependency relationship between the plurality of to-be-processed subobjects corresponding to the respective neural network layers; and
generating (S9023A) the plurality of first sub-intermediate representation instruction sequences based on the second dependency relationship.

4. The method according to claim 3, wherein the generating the plurality of first sub-intermediate representation instruction sequences based on the second dependency relationship comprises:
determining (S90231A), based on the second dependency relationship, second to-be-processed subobjects having dependency relationships with a plurality of first to-be-processed subobjects in an output object of the neural network model; and
generating (S90232A) the plurality of first sub-intermediate representation instruction sequences corresponding to the plurality of first to-be-processed subobjects based on the plurality of first to-be-processed subobjects, the second to-be-processed subobjects having the dependency relationships with the respective first to-be-processed subobjects, and the dependency relationships between the first to-be-processed subobjects and the second to-be-processed subobjects.

5. The method according to claim 2, wherein the generating, based on the hardware resources of the AI accelerator and the first dependency relationship, the plurality of first sub-intermediate representation instruction sequences included in the third intermediate representation instruction sequence comprises:
determining (S9021B), based on the hardware resources of the AI accelerator and the first dependency relationship, operation windows of the to-be-processed objects corresponding to the respective neural network layers;
Splitting (S9022B), based on the operation windows of the to-be-processed objects and the first dependency relationship, each of the to-be-processed objects to obtain a plurality of to-be-processed subobjects, and determining a second dependency relationship between the plurality of to-be-processed subobjects corresponding to the respective neural network layers; and
generating (S9023B) the plurality of first sub-intermediate representation instruction sequences based on the second dependency relationship and the operation windows of the to-be-processed objects.

6. The method according to claim 1, wherein the converting, based on a hardware resources of the AI accelerator, the first intermediate representation instruction sequence into one or more second intermediate representation instruction sequences respectively in one or more code generation ways comprises:
determining an operational flow of the neural network model based on the first intermediate representation instruction sequence; and
generating a fourth intermediate representation instruction sequence in the one or more second intermediate representation instruction sequences based on the hardware resources of the AI accelerator and the operational flow of the neural network model.

7. The method according to any one of claims 1-6, wherein the performing scheduling and resource allocation on each instructions in the respective second intermediate representation instruction sequences based on the hardware resources of the AI accelerator, to obtain running results of the respective second intermediate representation instruction sequences comprises:
determining (S2711) a third dependency relationship between the respective instructions in the second intermediate representation instruction sequence based on the second intermediate representation instruction sequence;
determining (S2712) required resources for respective instructions in the second intermediate representation instruction sequences; and
performing (S2713) scheduling and resource allocation on the respective instructions in the second intermediate representation instruction sequences based on the third dependency relationship and the required resources of the respective instructions in the second intermediate representation instruction sequences, to obtain the running results of the second intermediate representation instruction sequences.

8. The method according to claim 7, wherein the performing scheduling and resource allocation on the respective instructions in the second intermediate representation instruction sequences based on the third dependency relationship and the required resources of the respective instructions in the second intermediate representation instruction sequences, to obtain the running results of the second intermediate representation instruction sequences comprises:
determining a priority of the respective instructions in the second intermediate representation instruction sequences based on the third dependency relationship; and
performing scheduling and resource allocation on the respective instructions in the second intermediate representation instruction sequences according to a priority order based on the priority and the required resources of the respective instructions in the second intermediate representation instruction sequences, to obtain the running results of the second intermediate representation instruction sequences.

9. The method according to any one of claims 1 to 8, wherein the one or more code generation manner includes at least one of a simple code generation manner, an iterative-splitting code generation manner, and a sliding-window code generation manner.

10. A non-transient computer readable storage medium, wherein a computer program is stored thereon, which, when executed by a processor, is used for implementing the method for generating instructions of an artificial intelligence accelerator according to any one of claims 1 to 9.

11. An electronic apparatus, the electronic apparatus comprising:
a processor (31); and
a memory (32), configured to store a processor-executable instruction,
wherein the processor is configured to read the executable instruction from the memory, and execute the instruction to implement the method for generating instructions of an artificial intelligence accelerator according to any one of claims 1 to 9.

## Patentansprüche

1. Verfahren zum Erzeugen von Anweisungen eines Beschleunigers künstlicher Intelligenz, wobei das Verfahren umfasst:
Bestimmen (S501) einer ersten intermediären Sequenz von Darstellungsanweisungen, die einem neuronalen Netzwerkmodell entspricht, das von einem Beschleuniger künstlicher Intelligenz (KI) verarbeitet werden soll, wobei die erste intermediäre Sequenz von Darstellungsanweisungen eine höhere intermediäre Sequenz von Darstellungsanweisungen ist, die dem neuronalen Netzwerkmodell entspricht;
Konvertieren (S502), basierend auf einer Hardware-Ressource des KI-Beschleunigers, der ersten intermediären Sequenz von Darstellungsanweisungen in eine oder mehrere zweite intermediäre Sequenzen von Darstellungsanweisungen jeweils auf eine oder mehrere Codeerzeugungsarten, wobei die eine oder die mehreren zweiten intermediären Sequenzen von Darstellungsanweisungen niedrigere intermediäre Sequenzen von Darstellungsanweisungen sind, die dem neuronalen Netzwerkmodell entsprechen;
Ausführen (S271) einer Planung und Ressourcenzuteilung an jeder Anweisung in den jeweiligen zweiten intermediären Sequenzen von Darstellungsanweisungen basierend auf den Hardware-Ressourcen des KI-Beschleunigers, um laufende Ergebnisse der jeweiligen zweiten intermediären Sequenzen von Darstellungsanweisungen zu erzielen;
Bestimmen (S272) einer angestrebten intermediären Sequenz von Darstellungsanweisungen aus einer oder mehreren zweiten intermediären Sequenzen von Darstellungsanweisungen basierend auf den laufenden Ergebnissen der jeweiligen zweiten intermediären Sequenzen von Darstellungsanweisungen; und
Erzeugen (S5032) der durch den KI-Beschleuniger ausführbaren Anweisung basierend auf der angestrebten intermediären Sequenz von Darstellungsanweisungen.

2. Verfahren nach Anspruch 1, wobei das Konvertieren, basierend auf einer Hardware-Ressource des KI-Beschleunigers, der ersten intermediären Sequenz von Darstellungsanweisungen in eine oder mehrere zweite intermediäre Sequenzen von Darstellungsanweisungen jeweils auf eine oder mehrere Codeerzeugungsarten umfasst:
Bestimmen (S901), basierend auf der ersten intermediären Sequenz von Darstellungsanweisungen, von zu verarbeitenden Objekten, die jeweiligen neuronalen Netzwerkschichten in dem neuronalen Netzwerkmodell entsprechen, und einer ersten Abhängigkeitsbeziehung zwischen den zu verarbeitenden Objekten, die den jeweiligen neuronalen Netzwerkschichten entsprechen; und
Erzeugen (S902), basierend auf den Hardware-Ressourcen des KI-Beschleunigers und der ersten Abhängigkeitsbeziehung, einer Vielzahl von ersten subintermediären Sequenzen von Darstellungsanweisungen, die in einer dritten intermediären Sequenz von Darstellungsanweisungen in der einen oder den mehreren zweiten intermediären Sequenzen von Darstellungsanweisungen enthalten sind.

3. Verfahren nach Anspruch 2, wobei das Erzeugen, basierend auf den Hardware-Ressourcen des KI-Beschleunigers und der ersten Abhängigkeitsbeziehung, der Vielzahl von ersten subintermediären Sequenzen von Darstellungsanweisungen, die in der dritten intermediären Sequenz von Darstellungsanweisungen enthalten sind, umfasst:
Aufteilen (S9021A), basierend auf den Hardware-Ressourcen des KI-Beschleunigers und der ersten Abhängigkeitsbeziehung, jedes der zu verarbeitenden Objekte, um eine Vielzahl von zu verarbeitenden Sub-Objekten zu erzielen;
Bestimmen (S9022A), basierend auf der ersten Abhängigkeitsbeziehung, einer zweiten Abhängigkeitsbeziehung zwischen der Vielzahl von zu verarbeitenden Sub-Objekten, die den jeweiligen neuronalen Netzwerkschichten entsprechen; und
Erzeugen (S9023A) der Vielzahl von ersten subintermediären Sequenzen von Darstellungsanweisungen basierend auf der zweiten Abhängigkeitsbeziehung.

4. Verfahren nach Anspruch 3, wobei das Erzeugen der Vielzahl von ersten subintermediären Sequenzen von Darstellungsanweisungen basierend auf der zweiten Abhängigkeitsbeziehung umfasst:
Bestimmen (S90231A), basierend auf der zweiten Abhängigkeitsbeziehung, von zweiten zu verarbeitenden Sub-Objekten, die Abhängigkeitsbeziehungen mit einer Vielzahl von ersten zu verarbeitenden Sub-Objekten in einem Ausgabeobjekt des neuronalen Netzwerkmodells aufweisen; und
Erzeugen (S90232A) der Vielzahl von ersten subintermediären Sequenzen von Darstellungsanweisungen, die der Vielzahl von ersten zu verarbeitenden Sub-Objekten entsprechen, basierend auf der Vielzahl von ersten zu verarbeitenden Sub-Objekten, wobei die zweiten zu verarbeitenden Sub-Objekte, welche die Abhängigkeitsbeziehungen mit den jeweiligen ersten zu verarbeitenden Sub-Objekten und die Abhängigkeitsbeziehungen zwischen den ersten zu verarbeitenden Sub-Objekten und den zweiten zu verarbeitenden Sub-Objekten aufweisen.

5. Verfahren nach Anspruch 2, wobei das Erzeugen, basierend auf den Hardware-Ressourcen des KI-Beschleunigers und der ersten Abhängigkeitsbeziehung, der Vielzahl von ersten subintermediären Sequenzen von Darstellungsanweisungen, die in der dritten Sequenz von intermediären Darstellungsanweisungen enthalten sind, umfasst:
Bestimmen (S9021B), basierend auf den Hardware-Ressourcen des KI-Beschleunigers und der ersten Abhängigkeitsbeziehung, von Betriebsfenstern der zu verarbeitenden Objekte, die den jeweiligen neuronalen Netzwerkschichten entsprechen;
Aufteilen (S9022B), basierend auf den Betriebsfenstern der zu verarbeitenden Objekte und der ersten Abhängigkeitsbeziehung, jedes der zu verarbeitenden Objekte, um eine Vielzahl von zu verarbeitenden Sub-Objekten zu erzielen, und Bestimmen einer zweiten Abhängigkeitsbeziehung zwischen der Vielzahl von zu verarbeitenden Sub-Objekten, die den jeweiligen neuronalen Netzwerkschichten entsprechen; und
Erzeugen (S9023B) der Vielzahl von ersten subintermediären Sequenzen von Darstellungsanweisungen basierend auf der zweiten Abhängigkeitsbeziehung und den Betriebsfenstern der zu verarbeitenden Objekte.

6. Verfahren nach Anspruch 1, wobei das Konvertieren, basierend auf einer Hardware-Ressource des KI-Beschleunigers, der ersten intermediären Sequenz von Darstellungsanweisungen in eine oder mehrere zweite intermediäre Sequenzen von Darstellungsanweisungen jeweils auf eine oder mehrere Codeerzeugungsarten umfasst:
Bestimmen eines Betriebsflusses des neuronalen Netzwerkmodells basierend auf der ersten intermediären Sequenz von Darstellungsanweisungen; und
Erzeugen einer vierten intermediären Sequenz von Darstellungsanweisungen in der einen oder den mehreren zweiten intermediären Sequenzen von Darstellungsanweisungen basierend auf den Hardware-Ressourcen des KI-Beschleunigers und dem Betriebsfluss des neuronalen Netzwerkmodells.

7. Verfahren nach einem der Ansprüche 1 bis 6, wobei das Ausführen einer Planung und Ressourcenzuteilung an jeder Anweisung in den jeweiligen zweiten intermediären Sequenzen von Darstellungsanweisungen basierend auf den Hardware-Ressourcen des KI-Beschleunigers, um laufende Ergebnisse der jeweiligen zweiten intermediären Sequenzen von Darstellungsanweisungen zu erzielen, umfasst:
Bestimmen (S2711) einer dritten Abhängigkeitsbeziehung zwischen den jeweiligen Anweisungen in der zweiten intermediären Sequenz von Darstellungsanweisungen basierend auf der zweiten intermediären Sequenz von Darstellungsanweisungen;
Bestimmen (S2712) von notwendigen Ressourcen für die jeweiligen Anweisungen in den zweiten intermediären Sequenzen von Darstellungsanweisungen; und
Ausführen (S2713) einer Planung und Ressourcenzuteilung an den jeweiligen Anweisungen in den zweiten intermediären Sequenzen von Darstellungsanweisungen basierend auf der dritten Abhängigkeitsbeziehung und den notwendigen Ressourcen der jeweiligen Anweisungen in den zweiten intermediären Sequenzen von Darstellungsanweisungen, um die laufenden Ergebnisse der zweiten intermediären Sequenzen von Darstellungsanweisungen zu erzielen.

8. Verfahren nach Anspruch 7, wobei das Ausführen einer Planung und Ressourcenzuteilung an den jeweiligen Anweisungen in den zweiten intermediären Sequenzen von Darstellungsanweisungen basierend auf der dritten Abhängigkeitsbeziehung und den notwendigen Ressourcen der jeweiligen Anweisungen in die zweiten intermediären Sequenzen von Darstellungsanweisungen, um die laufenden Ergebnisse der zweiten intermediären Sequenzen von Darstellungsanweisungen zu erzielen, umfasst:
Bestimmen einer Priorität der jeweiligen Anweisungen in den zweiten intermediären Sequenzen von Darstellungsanweisungen basierend auf der dritten Abhängigkeitsbeziehung; und
Ausführen einer Planung und Ressourcenzuteilung an den jeweiligen Anweisungen in den zweiten intermediären Sequenzen von Darstellungsanweisungen gemäß einer Prioritätsreihenfolge basierend auf der Priorität und den notwendigen Ressourcen der jeweiligen Anweisungen in den zweiten intermediären Sequenzen von Darstellungsanweisungen,, um die laufenden Ergebnisse der zweiten intermediären Sequenzen von Darstellungsanweisungen zu erzielen.

9. Verfahren nach einem der Ansprüche 1 bis 8, wobei die eine oder die mehreren Codeerzeugungsarten mindestens eine von einer einfachen Codeerzeugungsart, einer Codeerzeugungsart mit iterativer Aufteilung und einer Codeerzeugungsart mit Gleitfenster umfasst.

10. Nicht vorübergehendes computerlesbares Speichermedium, auf dem ein Computerprogramm gespeichert ist, das, wenn es von einem Prozessor ausgeführt wird, verwendet wird, um das Verfahren zum Erzeugen von Anweisungen eines Beschleunigers künstlicher Intelligenz nach einem der Ansprüche 1 bis 9 umzusetzen.

11. Elektronisches Gerät, wobei das elektronische Gerät umfasst:
einen Prozessor (31); und
einen Speicher (32), der dazu konfiguriert ist, eine prozessorausführbare Anweisung zu speichern,
wobei der Prozessor dazu konfiguriert ist, die ausführbare Anweisung aus dem Speicher zu lesen und die Anweisung auszuführen, um das Verfahren zum Erzeugen von Anweisungen eines Beschleunigers künstlicher Intelligenz nach einem der Ansprüche 1 bis 9 umzusetzen.

## Revendications

1. Procédé pour générer des instructions d'un accélérateur d'intelligence artificielle, dans lequel le procédé comprend les étapes suivantes :
déterminer (S501) une première séquence d'instructions de représentation intermédiaire correspondant à un modèle de réseau neuronal qui doit être traité par un accélérateur d'intelligence artificielle (IA), dans lequel la première séquence d'instructions de représentation intermédiaire est une séquence d'instructions de représentation intermédiaire de haut niveau correspondant au modèle de réseau neuronal ;
sur la base de ressources matérielles de l'accélérateur IA, convertir (S502) la première séquence d'instructions de représentation intermédiaire en une ou plusieurs deuxièmes séquences d'instructions de représentations intermédiaires respectivement suivant un ou plusieurs modes de génération de code, dans lequel les une ou plusieurs deuxièmes séquences d'instructions de représentations intermédiaires sont des séquences d'instructions de représentations intermédiaires de bas niveau correspondant au modèle de réseau neuronal ;
réaliser (S271) une planification et une allocation de ressources sur chaque instruction dans les deuxièmes séquences d'instructions de représentations intermédiaires respectives sur la base des ressources matérielles de l'accélérateur IA afin d'obtenir des résultats d'exécution des deuxièmes séquences d'instructions de représentations intermédiaires respectives ;
déterminer (S272) une séquence d'instructions de représentation intermédiaire cible parmi une ou plusieurs deuxièmes séquences d'instructions de représentations intermédiaires sur la base des résultats d'exécution des deuxièmes séquences d'instructions de représentations intermédiaires respectives ; et
générer (S5032) l'instruction exécutable par l'accélérateur IA sur la base de la séquence d'instructions de représentation intermédiaire cible.

2. Procédé selon la revendication 1, dans lequel la conversion de la première séquence d'instructions de représentation intermédiaire en une ou plusieurs deuxièmes séquences d'instructions de représentations intermédiaires respectivement suivant un ou plusieurs modes de génération de code sur la base de ressources matérielles de l'accélérateur IA comprend ce qui suit :
sur la base de la première séquence d'instructions de représentation intermédiaire, déterminer (S901) des objets à traiter correspondant à des couches de réseau neuronal respectives dans le modèle de réseau neuronal, et une première relation de dépendance entre les objets à traiter correspondant aux couches de réseau neuronal respectives ; et
sur la base des ressources matérielles de l'accélérateur IA et de la première relation de dépendance, générer (S902) une pluralité de premières séquences d'instructions de représentations intermédiaires secondaires incluses dans une troisième séquence d'instructions de représentation intermédiaire des une ou plusieurs deuxièmes séquences d'instructions de représentations intermédiaires.

3. Procédé selon la revendication 2, dans lequel la génération de la pluralité de premières séquences d'instructions de représentations intermédiaires secondaires incluses dans la troisième séquence d'instructions de représentation intermédiaire sur la base des ressources matérielles de l'accélérateur IA et de la première relation de dépendance, comprend ce qui suit :
sur la base des ressources matérielles de l'accélérateur IA et de la première relation de dépendance, diviser (S9021A), chacun des objets à traiter afin d'obtenir une pluralité de sous-objets à traiter ;
sur la base de la première relation de dépendance, déterminer (S9022A) une deuxième relation de dépendance entre la pluralité de sous-objets à traiter correspondant aux couches de réseau neuronal respectives ; et
générer (S9023A) la pluralité de premières séquences d'instructions de représentations intermédiaires secondaires sur la base de la deuxième relation de dépendance.

4. Procédé selon la revendication 3, dans lequel la génération de la pluralité de premières séquences d'instructions de représentations intermédiaires secondaires sur la base de la deuxième relation de dépendance comprend ce qui suit :
sur la base de la deuxième relation de dépendance, déterminer (S90231A) des deuxièmes sous-objets à traiter ayant des relations de dépendance avec une pluralité de premiers sous-objets à traiter dans un objet de sortie du modèle de réseau neuronal ; et
générer (S90232A) la pluralité de premières séquences d'instructions de représentations intermédiaires secondaires correspondant à la pluralité de premiers sous-objets à traiter sur la base de la pluralité de premiers sous-objets à traiter, les deuxièmes sous-objets à traiter ayant lesdites relations de dépendance avec les premiers sous-objets à traiter respectifs, et lesdites relations de dépendance entre les premiers sous-objets à traiter et les deuxièmes sous-objets à traiter.

5. Procédé selon la revendication 2, dans lequel la génération de la pluralité de premières séquences d'instructions de représentations intermédiaires secondaires incluses dans la troisième séquence d'instructions de représentation intermédiaire sur la base des ressources matérielles de l'accélérateur IA et de la première relation de dépendance comprend ce qui suit :
sur la base des ressources matérielles de l'accélérateur IA et de la première relation de dépendance, déterminer (S9021B) des fenêtres d'opération des objets à traiter correspondant aux couches de réseau neuronal respectives ;
sur la base des fenêtres d'opération des objets à traiter et de la première relation de dépendance, diviser (S9022B) chacun des objets à traiter afin d'obtenir une pluralité de sous-objets à traiter, et déterminer une deuxième relation de dépendance entre les sous-objets de la pluralité de sous-objets à traiter correspondant aux couches de réseau neuronal respectives ; et
générer (S9023B) la pluralité de premières séquences d'instructions de représentations intermédiaires secondaires sur la base de la deuxième relation de dépendance et des fenêtres d'opération des objets à traiter.

6. Procédé selon la revendication 1, dans lequel, la conversion de la première séquence d'instructions de représentation intermédiaire en une ou plusieurs deuxièmes séquences d'instructions de représentations intermédiaires respectivement suivant un ou plusieurs modes de génération de code sur la base de ressources matérielles de l'accélérateur IA comprend ce qui suit :
déterminer un flux opérationnel du modèle de réseau neuronal sur la base de la première séquence d'instructions de représentation intermédiaire ; et
générer une quatrième séquence d'instructions de représentation intermédiaire des une ou plusieurs deuxièmes séquences d'instructions de représentations intermédiaires sur la base des ressources matérielles de l'accélérateur IA et du flux opérationnel du modèle de réseau neuronal.

7. Procédé selon l'une des revendications 1 à 6, dans lequel la réalisation de la planification et de l'allocation de ressources sur chaque instruction dans les deuxièmes séquences d'instructions de représentations intermédiaires respectives sur la base des ressources matérielles de l'accélérateur IA afin d'obtenir des résultats d'exécution des deuxièmes séquences d'instructions de représentations intermédiaires respectives comprend ce qui suit :
déterminer (S2711) une troisième relation de dépendance entre les instructions respectives dans la deuxième séquence d'instructions de représentation intermédiaire sur la base de la deuxième séquence d'instructions de représentation intermédiaire ;
déterminer (S2712) des ressources requises pour des instructions respectives dans les deuxièmes séquences d'instructions de représentations intermédiaires ; et
réaliser (S2713) la planification et l'allocation de ressources sur les instructions respectives dans les deuxièmes séquences d'instructions de représentations intermédiaires sur la base de la troisième relation de dépendance et des ressources requises des instructions respectives dans les deuxièmes séquences d'instructions de représentations intermédiaires afin d'obtenir les résultats d'exécution des deuxièmes séquences d'instructions de représentations intermédiaires.

8. Procédé selon la revendication 7, dans lequel la réalisation de la planification et de l'allocation de ressources sur les instructions respectives dans les deuxièmes séquences d'instructions de représentations intermédiaires sur la base de la troisième relation de dépendance et des ressources requises des instructions respectives dans les deuxièmes séquences d'instructions de représentations intermédiaires afin d'obtenir les résultats d'exécution du deuxièmes séquences d'instructions de représentations intermédiaires comprend ce qui suit :
déterminer une priorité des instructions respectives dans les deuxièmes séquences d'instructions de représentations intermédiaires sur la base de la troisième relation de dépendance ; et
réaliser la planification et l'allocation de ressources sur les instructions respectives dans les deuxièmes séquences d'instructions de représentations intermédiaires selon un ordre de priorité sur la base de la priorité et des ressources requises des instructions respectives dans les deuxièmes séquences d'instructions de représentations intermédiaires, afin d'obtenir les résultats d'exécution des deuxièmes séquences d'instructions de représentations intermédiaires.

9. Procédé selon l'une des revendications 1 à 8, dans lequel les un ou plusieurs modes de génération de code comportent au moins un parmi un mode de génération de code simple, un mode de génération de code par division itérative et un mode de génération de code à fenêtre glissante.

10. Support de stockage non transitoire lisible par ordinateur dans lequel est stocké un programme informatique qui, lorsqu'il est exécuté par un processeur, est utilisé pour mettre en œuvre le procédé pour générer des instructions d'un accélérateur d'intelligence artificielle selon l'une des revendications 1 à 9.

11. Appareil électronique, l'appareil électronique comprenant :
un processeur (31) ; et
une mémoire (32) configurée pour stocker une instruction exécutable par un processeur,
dans lequel le processeur est configuré pour lire l'instruction exécutable à partir de la mémoire et exécuter l'instruction pour mettre en œuvre le procédé pour générer des instructions d'un accélérateur d'intelligence artificielle selon l'une des revendications 1 à 9.
